(19) Europäisches Patentamt
European Patent Office
Office européen des brevets

(11) EP 0 320 019 B1

(12) # EUROPEAN PATENT SPECIFICATION

(45) Date of publication and mention of the grant of the patent:
**06.03.1996 Bulletin 1996/10**

(51) Int Cl.[6]: **G01N 27/42**

(21) Application number: **88120719.5**

(22) Date of filing: **12.12.1988**

(54) **Method and apparatus for the quantitative analysis of solutions and nuclear water quality control system**

Verfahren und Vorrichtung zur quanititativen Analyse von Lösungen sowie Kontrollsystem zur Überwachung der Wasserqualität in Kernreaktoren

Méthode et appareillage pour l'analyse quantitative de solutions et système de contrôle de la qualitè de l'eau dans des réacteurs nucléaires

(84) Designated Contracting States:
**DE FR GB SE**

(30) Priority: **11.12.1987 JP 311969/87**
**17.05.1988 JP 119125/88**

(43) Date of publication of application:
**14.06.1989 Bulletin 1989/24**

(73) Proprietor: **HITACHI, LTD.**
**Chiyoda-ku, Tokyo 101 (JP)**

(72) Inventors:
- **Sakai, Masanori**
  **Hitachi-shi (JP)**
- **Ohsumi, Katsumi**
  **Hitachi-shi (JP)**
- **Ohnaka, Noriyuki**
  **Katsuta-shi (JP)**
- **Kikuchi, Eiji**
  **Katsuta-shi (JP)**
- **Mabuchi, Katsumi**
  **Hitachi-shi (JP)**
- **Takahashi, Takuya**
  **Hitachi-shi (JP)**

(74) Representative: **Patentanwälte**
**Beetz - Timpe - Siegfried Schmitt-Fumian - Mayr**
**Steinsdorfstrasse 10**
**D-80538 München (DE)**

(56) References cited:
**EP-A- 0 122 511**
**EP-A- 0 141 282**
**EP-A- 0 274 396**
**EP-A- 0 293 541**
**FR-A- 2 351 412**
**US-A- 4 576 705**

- **PATENT ABSTRACTS OF JAPAN, vol. 10, no. 288 (P-502)[2344], 30th September 1986; & JP-A-61 107 150**

EP 0 320 019 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a method and an apparatus for the quantitative analysis of solutions according to the preambles of the independent claims 1 and 8. Such a method and such an apparatus have been known from EP-A-0 122 511. The invention also relates to a nuclear reactor water quality control system intended for water quality control for nuclear reactors.

This invention is suitably applicable to water quality testing and control in boiling water reactors (BWR) and pressurized water reactors (PWR).

The water used in nuclear reactors contains dissolved $H_2$, $O_2$, and $H_2O_2$, The amounts of these dissolved gases change as the gases circulate in the nuclear reactor cooling system For each gas, there is a maximum tolerable limit, beyond which the gas can corrode the reactor pipes, posing a potential danger of water leak or even pipe breakage.

Therefore, an important requirement is to sample the high-temperature, high-pressure water circulating in the cooling system of a nuclear reactor, to perform quantitative analyses of $H_2$, $O_2$, and $H_2O_2$, and to ensure an adequate control of the water quality based on the results of the analyses.

Among the means of simultaneously detecting dissolved $O_2$ and $H_2O_2$ contained in the reactor water in a nuclear reactor is a method of simultaneously measuring dissolved oxygen and hydrogen peroxide by using a dissolved oxygen meter and a hydrogen peroxide decomposition activated charcoal column, published in JP-A-55-142437.

The above prior art, however, provides no specific information on performing a quantitative analysis of dissolved oxygen in the reactor water. It is unclear whether or not this prior art is applicable to the analysis of high-temperature, high-pressure water in the primary cooling system of nuclear reactors.

EP-A-0 122 511 discloses a method and an apparatus for measuring dissolved gas concentrations. In this apparatus, two dissolved gas components in sample water, e.g., oxygen and hydrogen in core water, are readily quantitatively determined in an oxygen meter by using a membrane producing an overlapped potential region where a potential region for an oxidation limiting current plateau is overlapped with that for a reduction limiting current plateau between two dissolved gas components. Between an electrode and a counterelectrode a more positive potential than the equilibrium potential and a potential more negative than the equilibrium potential, respectively, is applied, and the current generated between the electrodes is measured.

It is the object of the invention to provide a method and an apparatus allowing an improved detection of chemical species present in a solution, and a system for nuclear reactor water quality control.

This object is achieved in accordance with the features of the independent claims 1, 8 and 17 ; the dependent claims are directed on preferred embodiments of the invention.

The method of the present invention for the quantitative analysis of solutions comprises the steps of

- contacting a working electrode, a counterelectrode and a reference electrode in an electrolytic cell with a solution to be tested containing a plurality of chemical species,
- electrolyzing the solution by applying different voltages for the chemical species to be analyzed to the electrolytic cell;
- determining current values, according to the kind of voltammetry employed, from the electrolysis current resulting from the above electrolysis step, and
- calculating the concentrations of the plurality of chemical species to be analyzed, based on the current values thus determined; it is

characterized in that

- in the electrolyzing step different voltage-time waveform signals for the chemical species to be analyzed are applied,
- in the determining step limiting current or peak current values and the voltage required to produce the electrolysis currents are determined, and
- in the computing step the concentrations are computed based on the limiting current or peak current values.

The apparatus of the present invention for the quantitative analysis of solutions, particularly for carrying out the above-defined method comprises

- an electrolytic cell for electrolyzing the solution to be tested, the cell being provided with a working electrode, a counterelectrode and a reference electrode;
- voltage application means for applying different voltage signals having specified parameters determined by the kind of voltammetry employed, to the working electrode in said electrolytic cell as reference electrode standard voltage,
- current determination means for determining currents obtained by electrolyzing the sample, and
- concentration calculation means for calculating the concentrations of the chemical species to be analyzed, based on the current values thus obtained;

it is characterized in that

- the voltage application means apply different voltage-time waveform signals for the chemical species to be analyzed,
- the current determination means determine limiting current or peak current values based on the currents obtained by electrolyzing the sample, and
- the concentration calculation means (16) calculate the concentrations based on the limiting current or peak current values.

The voltage-time waveform signal applied to the working electrode in the electrolytic cell has certain parameters which are determined by the kind of voltammetry employed.

When a solution containing $H_2$ and $H_2O_2$ or a solution containing $O_2$ and $H_2O_2$ is electrolyzed by simple electrochemical procedures, the observed electrolysis current contains current components of both $H_2$ and $H_2O_2$ or both $O_2$ and $H_2O_2$, and it is impossible to determine the individual concentrations of $H_2$, $O_2$, and $H_2O_2$.

According to the present invention, on a solution containing two chemical species, $H_2O_2$ and either $H_2$ or $O_2$, two kinds of voltammetry are performed; similarly, on a solution containing three chemical species, $H_2$, $O_2$, and $H_2O_2$, three kinds of voltammetry are performed. Each voltammetry is performed by changing the parameters for the voltage-time waveform signals which are applied to the electrolytic cell, thus allowing simultaneous determination of the individual concentrations of $H_2$, $O_2$, and $H_2O_2$.

Electrolytic analysis is well suited to in situ quantitative analysis of high-temperature, high-pressure water in the primary cooling system of a nuclear reactor. Further, its fast concentration determination capability lends itself to rapid control of water quality of the reactor water.

A favored method of voltammetry for the purpose of this invention is the pulse-mode pulse voltammetry. In the embodiments of this invention, to be described later, favorable results have been obtained by using normal pulse voltammetry and differential pulse voltammetry.

The types of pulse voltammetry that can be used for the purpose of this invention include: normal pulse voltammetry, reverse pulse voltammetry, differential voltammetry, differential normal pulse voltammetry, and square-wave pulse voltammetry.

A discussion of the pulse mode in computerized pulse voltammetry may be found in Analytical Chemistry, Vol. 43, No. 3, March 1971, pp 342-348.

A detailed description of the differential normal pulse voltammetry may be found in the Journal of Electroanalytical Chemistry, 110 (1980) pp 1-18.

The application of the square-wave voltammetry to the quantitative analysis is discussed in Analytical Chemistry, 49, 13 (1977) pp 1904-1908, and in Analytical Chemistry 36 (1987) pp 420-424.

Discussions on normal pulse voltammetry, differential pulse voltammetry, and reverse pulse voltammetry, and a comprehensive theory on pulse voltammetry, may be found in the Bulletin of the Chemical Society of Japan 53 (1980) pp 3439-3446, and the Journal of Electroanalytical Chemistry 205 (1986) pp 21-34.

However, in the above publications pulse voltammetry is discussed from a purely electrochemical standpoint. Until now, most of the discussions concerning the applicability of pulse voltammetry to quantitative analysis were centered on the merits of analytical methods using a single-pulse mode, the reason being that pulse voltammetry employed in the single-pulse mode offers the highest accuracy among the current voltammetry methods, and that for most quantitative analysis purposes the attainable accuracy of the single-pulse mode is sufficient. However, there has been little discussion on quantitative analytical methods employing a combination of several types of pulse modes.

In the quantitative analysis apparatus for the purpose of this invention, a potentiostat should be provided as voltage application means for applying voltage-time waveform signals to the working electrode in the electrolytic cell, and a CPU should be provided for supplying the waveform signals to the potentiostat.

The CPU should provide the following features: a signal input unit for entering into the potentiostat voltage-time waveform signals having specified parameters according to the kind of voltammetry employed; a storage unit for storing in memory the results of voltammetry analyses, for each chemical species in the sample solution to be analyzed and treated by the potentiostat, as a relationship between the electrolysis current and the voltage required to produce the electrolysis current; current determination means which process the data stored in the storage unit and which determine the limiting current or peak current values according to the kind of voltammetry employed; and concentration calculation means which calculate the concentrations of the desired chemical species, based on the determined limiting current or the peak current values.

The function of the potentiostat is to accurately apply the voltage-time waveform signals, supplied by the CPU with function generators, as reference electrode standard voltage to the working electrode.

In the above calculation step of the method according to the present invention, an equation in which the concentrations of the desired substances are treated as unknown variables is set up for each voltammetry, and the concentrations of the desired substances are determined by solving these equations as a set of simultaneous equations.

The nuclear reactor water quality control system of the present invention comprises analysis means for performing a quantitative analysis of the reactor water in the primary cooling system of a nuclear reactor based on electrolysis, and reactor water control means for controlling the water quality of the reactor water based on the results obtained from the analysis means; it is
characterized in that
the analysis means are an apparatus according to the invention as defined above, and the reactor water control means control the water quality of the reactor water based on the concentrations calculated in the analysis means.

In accordance with a preferred embodiment, the water quality control system comprises an apparatus as defined above which is
characterized in that
the voltage application means comprise a potentiostat and a CPU comprising a signal discharge unit for applying voltage-time waveform signals which are put in from the CPU to the working electrode in the electrolytic cell, the CPU being provided with a signal input unit for entering voltage-time waveform signals, having specified parameters which are determined by the kind of voltammetry employed, in the potentiostat; and
it further comprises a storage unit which stores in a memory the results of the voltammetry performed by the potentiostat, for each chemical species to be analyzed and present in the test solution, as a relationship between the resulting electrolysis current and the voltage required to produce it, wherein
the current determination means process the data stored in the storage unit.

This nuclear reactor water quality control system comprises an electrode housing unit in the electrolytic cell, which is installed in at least one location in the primary cooling system so that the cell comes into contact with reactor water; a signal discharge unit which applies voltage-time waveform signals having specified parameters to the working electrode in said electrolytic cell as reference electrode standard voltage; a signal input unit which inputs to the signal discharge unit voltage-time waveform signals having parameters which are determined by the kind of voltammetry utilized, for each chemical species contained in the primary cooling system, and by changing the parameter for each chemical species involved; a storage unit which stores in a memory the results of the voltammetry performed according to the signals supplied by the signal discharge unit, in terms of a relationship between electrolysis current and the voltage required to produce the electrolysis current; a current value determination unit as current determination means which processes the data stored in the storage unit and which determines the limiting current or peak current, according to the kind of voltammetry employed; a concentration calculation unit as concentration calculation means which calculates the concentrations of the desired chemical species in the reactor water, based on the limiting current or peak current values thus determined; and reactor water control means which regulate the water quality of the reactor water, based on the information produced by the concentration computation unit.

The electrode housing unit for the electrolytic cell should be installed in the reactor core, in the reactor core outlet, or in the water vapor separator in the reactor. Particularly, it should be installed in the reactor core. If it is installed in the reactor core, it should be installed in an instrumentation column, such as a neutron instrumentation column. Further, in the electrolytic cell, a hydrophobic membrane permeable to gases should be provided; and the dissolved gases in the reactor water should be allowed to come into contact with the electrodes through the gas-permeable membrane, to prevent leakage to the outside world of electrolytic substances, such as potassium chloride, potassium nitrate, and sodium sulfate, which are provided in the electrolytic cell for the purpose of increasing the electrical conductivity of the solution. An example of a hydrophobic gas-permeable membrane that might be used is a membrane made of polytetrafluoroethylene.

Examples of water quality parameters to be controlled by performing a quantitative analysis of the reactor water are $H_2$ and $O_2$, and the amount of dissolved hydrogen (DH) which is to be injected into the vaporizer in the reactor. In a nuclear reactor, it is possible to control the amount of $H_2$ in the reactor water in terms of $H_2$ data, $O_2$ data, $H_2O_2$ data, or by a combination of these 2 or 3 types of data, obtained by quantitative analysis. The amount of $N_2H_2$ to be injected into the vaporizer should be controlled in terms of the $O_2$ concentration data obtained by the quantitative analysis.

In a system designed to control the water quality of reactor water, there should be a concentration comparison unit for comparing the results produced by the concentration calculation unit of the CPU with standard values. Such a comparison unit should be provided in the CPU.

In the water quality control system of the present invention, the water quality should be regulated by measuring at least one among the variables of the reactor water conductivity, the pH, or the electric potential at the sampling point during the quantitative analysis of the reactor water, and by taking this information and the dissolved gas information into consideration.

The nuclear reactor water quality control system as defined above may preferably comprise means of setting off an alarm when the results obtained by the quantitative analysis means exceed a predefined value.

Such a system comprises the following elements: An electrode housing unit for the electrolytic cell, which is installed in at least one location in the primary cooling system so that the cell will come in to contact with reactor water; a signal

discharge component which applies to the working electrode of the electrolytic cell voltage-time waveform signals having specified parameters, as reference electrode standard voltage; a signal input unit, which supplies to the signal discharge unit voltage-time waveform signals having parameters according to the kind of voltammetry employed, for each chemical species contained in the primary cooling system, the signal input unit being capable of changing the parameter for each chemical species; a storage unit which stores in a memory the results of the voltammetry performed according to the signals supplied by the signal discharge unit, and storing the data in terms of a relationship between the electrolysis current and the voltage required to obtain the electrolysis current; a current value determination unit which processes the data stored in the storage unit and which determines limiting current or peak current values, according to the kind of voltammetry employed; a concentration calculation unit as concentration calculation means which calculates the concentrations of the desired chemical species in the reactor water, based on the determined limiting current or peak current values; a concentration comparison unit which compares the results of the concentration calculation unit with standard values; and the aforementioned alarm generator which sets off an alarm when the results produced by the concentration calculation unit, based on the information supplied by the concentration comparison unit, exceed the standard value.

It is even more desirable that the primary cooling system of the nuclear reactor be provided with means for measuring the ion concentrations of $SO_4^{2-}$, $SO_3^-$, $Cl^-$, and $Na^+$, which are the decomposition products of chemical resins which are provided for the purpose of cleaning the nuclear reactor water; and means for setting off an alarm when one or more of these ion concentrations exceed the standard value.

In accordance with a preferred embodiment, the system is an accident forewarning system for the primary cooling system of a nuclear reactor which predicts a potential accident in the primary cooling system, based on the information supplied by the comparison unit.

It is highly desirable that the above-described nuclear reactor water quality control system, reactor water accident prevention system, or the accident prediction system be provided with a monitoring system to ensure that the signal input unit, the signal supply unit, the concentration calculation unit, and the concentration comparison unit are working properly. As an additional feature, in the event of a malfunction detected by the monitoring system, the system should be able to set off an alarm.

Any input of signals generated by the signal input unit to the signal discharge unit should be performed via a function generator.

Among the prior art relating to water quality assurance for nuclear reactors is a method for reducing the concentration of radioactive species in the reactor water by controlling the concentrations of nickel and cobalt ions in the water supply in such a way that the concentrations will be higher at the beginning of the reactor operation, declining gradually with the passage of time, according to their concentration change curves (JP-A-61-148394). However, there is no mention in this document of a quantitative in situ analysis of chemical species such as $H_2$, $O_2$, and $H_2O_2$ found in the cooling water system, or a method of controlling the water quality by feeding the analytical information back to the control system.

JP-A-60-238791 discloses a problem diagnosis system for nuclear power plants. This system compares with boundary values the deviation of data collected from the plant from the output values obtained by entering the data into a reference model, so as to automate the process of identifying the type of breakage that has occurred, based on codes generated by the model.

Concerning plant emergency operation support equipment, JP-A-61-164194 describes a system consisting of a detector for measuring a process quantity of the plant, a monitoring device for checking the conditions of multiplexed pieces of equipment, three evaluation methods, and display units, for reducing the workload on the operating personnel.

Adequate methods for quantitatively analyzing the concentrations of $H_2O_2$, $O_2$, and $H_2$ are necessary in many fields, especially for controlling the corrosive environment prevailing in nuclear reactor water cooling systems. Among the existing prior art regarding the measurement of the concentration of $H_2O_2$, JP-A-55-146035 describes a method of electrolyzing an aqueous solution of $H_2O_2$ under constant cathode voltage, and determining the concentration of $H_2O_2$ by measuring the resulting electrolysis current. However, in cases where both $O_2$ and $H_2O_2$ are present, the electrolysis current observed under this method will contain the current component due to $O_2$ as well that due to $H_2O_2$. Thus, this method does not allow a determination of the concentration of $H_2O_2$ alone.

A device for determining the concentration of $H_2O_2$ in the presence of $O_2$ is described in JP-A-56-37549. This device removes the effect of oxygen by dipping both an oxygen detector and an auxiliary oxygen detector in the test solution. However, since this device contains an oxygen-permeable membrane and a hydrogen peroxide decomposition membrane, its analytical performance can be significantly affected by the surrounding environment. At any rate, it cannot be used in high-temperature, high-pressure nuclear reactor cooling water.

Quantitative analysis devices for the analysis of $O_2$ or $H_2$, applicable under high-temperature, high-pressure conditions, have been developed, such as the devices described in JP-A-59-174748 and JP-A-59-3345. However, these devices do not allow a quantitative analysis of $O_2$ or $H_2$ in solutions in which $H_2O_2$ occurs together with $O_2$ or $H_2$.

To achieve an in situ analysis of the water quality of nuclear reactor water and to control the water quality, a technique for the simultaneous quantitative analysis of $O_2$, $H_2$ and $H_2O_2$ is essential. A survey of existing reactor water monitoring

techniques, even if the survey is narrowly focused on this requirement, indicates that no such techniques exist in the public domain, as discussed above.

The electrolysis currents, measured by running several types of pulse voltammetry using different voltage-time waveform signals, are given in different function forms. Therefore, the diffusion limiting current values and peak current values of a current/ voltage curve, consisting of additive electrolysis current components of the several types of the substances to be measured, which have been measured in different pulse electrolysis modes, can be expressed for each pulse mode as independent equations whose unknown variables are the concentrations of the target substances. Therefore, the concentrations of these substances can be determined by solving these equations by treating them as a set of simultaneous equations.

Through execution of multiple voltammetries, a voltammetry device, especially a pulse voltammetry device, which is connected to a computer is capable of performing simultaneous quantitative in situ analyses of multiple chemical species present in a reactor water system. Such a device can also print or display the analytical results to present the results of water quality tests in clear format to human operators, thus helping humans to monitor the water quality.

This voltammetry instrument system can compare previously entered standard values for various chemical species with the results of simultaneous quantitative in situ analyses by using a computer, and based on this comparison, can feed gases and chemical species rapidly and accurately into the reactor in order to adjust its water quality. In this manner, the device performs water quality control.

In the following, the invention will be explained with reference to the drawings.

Figure 1 is a schematic configuration diagram showing a BWR plant water quality control system containing a tri-electrode system inside instrumentation columns. Figure 2 is a schematic configuration diagram showing a BWR plant water quality control system containing a tri-electrode system in an electrolytic cell which is provided with permeable membranes and which is installed in an instrumentation column. Figure 3 is a schematic configuration diagram of a BWR plant water quality control system equipped with a safety diagnosis system. Figure 4 is a schematic configuration diagram of a BWR plant water quality control system, in which water quality monitors are provided in various locations. Figure 5 (a) is a reduction current/voltage curve of $O_2$, using normal pulse voltammetry. Similarly, Figure 5 (b) is a reduction current/voltage curve of $H_2O_2$. Also similarly, Figure 5 (c) is a reduction current/voltage curve of $O_2$ and $H_2O_2$, whose concentrations are equal to those shown in Figures 5 (a) and (b). Figure 6 is an applied signal waveform diagram for normal pulse voltammetry. Figure 7 is a characteristic diagram showing the influence of impurities on sensitized SUS304 steel, as determined by slow strain rate tests (SSRT). Figure 8 is a characteristic diagram showing the influence of impurities on sensitized SUS316 steel, as determined by SSRT tests. Figure 9 is a correlational graph showing the IGSCC sensitivity of $H_2O_2$-$O_2$ at 150°C. Figure 10 is a characteristic diagram showing the influence of the pH and anions on the IGSCC of sensitized SUS304 steel in hot water containing oxygen. Figure 11 is a characteristic diagram showing the influence of the corrosion voltage on the speed of fracture in sensitized SUS304 steel. Figure 12 is a characteristic diagram showing the time dependencies of corrosion voltage and dissolved hydrogen concentration which are regulated by an $H_2$ injection control system. Figure 13 is a characteristic diagram showing the time dependencies of the dissolved $O_2$, dissolved $H_2$, dissolved $H_2O_2$, iron ion concentration, pH, conductivity, and corrosion voltage, which are regulated by a water quality control system. Figure 14 is an enlarged view of the electrode housing unit shown in Figure 1. Figure 15 is an enlarged view of the electrode housing unit shown in Figure 2. Figures 16 - 19 are applied signal waveforms of the various voltammetries.

In the following, this invention will be further explained with reference to embodiments; however, this invention is not limited to the embodiments given below.

Example 1

Example 1 illustrates the location of installation of a tri-electrode system in a BWR nuclear reactor pressure vessel, the configuration of the tri-electrode system, an analytical system, a water quality control system, a safety diagnosis system, analysis implementation examples, and the underlying principles of analyses.

Figure 1 shows the peripheral structural constituent elements in a BWR nuclear reactor pressure vessel 1 of Example 1. Figure 14 shows an enlarged view of the electrode housing unit. The electrode housing unit 2 of the tri-electrode system is inserted into the reactor instrumentation column 14, and is in contact with the reactor water inside the reactor core 10. The reactor instrumentation column 14 into which the tri-electrode system is inserted has an opening inside the reactor core 10; the electrodes are inserted into the column in a double structure. After the insertion, the neutron instrumentation inner column 7 into which the tri-electrode system is inserted serves to shield the reactor water from the outside world. The electrode system comprises a counterelectrode 3, a working electrode 4, also known as a monitor electrode, a reference electrode 5 and represents an electrode support 6, which is an insulator. The monitor electrode 4 is operated by a potentiostat, an electro-chemical interface 15, and a CPU 16 (a computer CPU and an auto-control unit). The analytical results are transmitted to a remote control command system and an analytical results display unit 19.

The analytical results are compared in the CPU 16 with previously entered standard values, and based on this

comparison the CPU 16 sends instructions to the control system in a gas/chemical injection system 17 to cause valves to be opened and closed. By repeating this process, the CPU 16 regulates the water quality.

The monitor electrode 4 can be either a plate electrode, a microelectrode or a wire-type needle electrode, which is on the same plane as the electrode support 6 is; the monitor electrode can be made in any shape and with any material. The reference electrode 5 may be a saturated calomel electrode (SCE), a standard hydrogen electrode (SHE), or a silver-silver chloride electrode (Ag-AgCl), and so on. In the drawing, the dashed lines indicate the connection conditions of electrical circuits and interface bus lines.

In pressure vessels in nuclear reactors, $H_2$, $O_2$, and $H_2O_2$ gases are generated when radiation decomposes water. Most of such gas generation occurs in the nuclear core. Therefore, in controlling the gas formation reactions so as to control the water quality, the capability of a water quality control system can be improved by conducting water quality analysis directly inside the nuclear core. And for maintenance checks on electrodes, the electrodes can be removed from the nuclear core instrumentation columns.

As with the case of the above in-reactor instrumentation column, the electrodes can be installed on the drier, separator 9, radiation test piece insertion instruments, and other removable equipment and parts, so that the electrodes can be installed inside the nuclear reactor pressure vessel. Also, they can be installed directly on the walls of the pressure vessel.

As a variation of this embodiment, flangings can be installed directly inside the nuclear reactor recirculation pipe 18, or the reactor water can be routed to a sampling pipe, and the electrodes can be attached to the sampling line, thus ensuring the measurement of the water quality. Although electrodes attached at such locations take more time to detect the reaction products generated inside the reactor core, for the purpose of controlling the contents of impurities circulating in the primary cooling system they offer sufficient measurement accuracy. The most general application of these monitoring systems would be to attach them all over the components such as nuclear reactor water supply pipe 11, nuclear reactor cleaning system 12, and around the nuclear reactor cleaning and desalinization equipment 13, rather than attaching them in the reactor core or in flangings only, so as to manage and control the water quality and to detect potential leaks of the cooling water, thus providing a comprehensive, total water quality control and safety diagnosis system.

Similarly, the electrodes can be installed in a boiling water reactor (BWR) or inside the secondary vaporizer of a pressurized water reactor (PWR), or in the boilers in thermal plants.

In Figure 2, the electrode housing unit 2 consists of an electrolytic cell provided with a permeable membrane which is a hydrophobic gas-permeable membrane 20. Sealed in the cell is a dilute electrolyte solution 21. Figure 15 shows an enlargement of the electrode housing unit. Use of this cell facilitates electrochemical measurements.

In Figure 3, the BWR reactor comprises the electrodes and the electrolytic cell used in that of Figures 1 and 2, to which a control monitoring system 22 for monitoring the water quality control system has been added. The control monitoring system 22 comprises at least one computer/CPU. These computers determine whether or not the CPU 16, for controlling the water quality control system, and the electrochemical interface 15 are operating properly, in order to ensure the reliability and stability of the water quality control system. For detecting an abnormal operation, the signals from the water quality control system consisting of the electrochemical interface 15, the CPU 16, and the gas/chemical injection system 17 are returned to a dummy circuit, and the criterion employed for detecting the presence of an abnormal operation is based on the determination whether or not the results of computation, analysis, and control are within specified values and specified precision.

Figure 4 is a comprehensive water quality control system consisting of all the constituent elements depicted in Figures 1 through 3. Specifically, in this control system electrode housing units 2 are distributed in the reactor, the water supply system, the circulation system, and the cleaning system; the control system performs water quality controls based on the analysis of the water quality at these various locations. Especially, during a water leak accident it is useful to detect any abnormality in the concentration of dissolved $O_2$ at these various locations.

Figure 5 (a) is a reduction current/voltage curve of $O_2$, measured by using the normal pulse voltammetry mode. Similarly, Figure 5 (b) is a reduction current/voltage curve of $H_2O_2$, measured by using the normal pulse voltammetry mode. Figure 5 (c) is a normal pulse voltammogram in the direction of reduction of the primary cooling water solution, containing $O_2$ and $H_2O_2$ of the same concentrations as the concentrations of $O_2$ and $H_2O_2$ measured in (a) and (b), where the horizontal axis represents the applied voltage. As shown in the normal pulse signal waveforms in Figure 6, the applied voltage is applied and sweeped in pulses, with an applied step width of Esh relative to the reference electrode, where tp denotes the pulse width. Each of the vertical axes in Figure 5 represent the electrolysis current which was observed relative to the different pulse-like applied voltages. The electrolysis current is sampled at the final step 23 of pulse width tp of the normal pulse voltammetry shown in Figure 6.

$i^{NP}_{O_2}$ shown in Figure 5 (a) is the limiting current value for reducing $O_2$, while $i^{NP}_{H_2O_2}$ shown in Figure 5 (b) is the limiting

current value for reducing $H_2O_2$. $I^{NP}_{(O_2+H_2O_2)}$ in Figure 5 (c) is the limiting current for the simultaneous reduction of $O_2$ and $H_2O_2$. These 3 current/voltage curves were measured by using a platinum disc electrode as monitor electrode 4. Figure 5 (a) was measured using a solution containing $O_2$ but no $H_2O_2$. Figure 5 (b) was measured using a solution containing $H_2O_2$ but no $O_2$. Figure 5 (c) was measured using a solution containing both $H_2O_2$ and $O_2$.

The limiting current value $I^{NP}_{(O_2+H_2O_2)}$ in Figure 5 (c) is given as the sum of the electrolysis current components $i^{NP}_{O_2}$ and $i^{NP}_{H_2O_2}$ of $O_2$ and $H_2O_2$, respectively:

$$I^{NP}_{(O_2+H_2O_2)} = i^{NP}_{O_2} + i^{NP}_{H_2O_2} \quad (1).$$

Generally, $i^{NP}_{O_2}$ and $i^{NP}_{H_2O_2}$ can be given by the following equations:

$$i^{NP}_{O_2} = f\left(n_{O_2}, D_{O_2}, tp\right)C_{O_2} \quad (2),$$

$$i^{NP}_{H_2O_2} = f\left(n_{H_2O_2}, D_{H_2O_2}, tp\right)C_{H_2O_2} \quad (3),$$

where $n_j$, Dj, and Cj (j denoting either $O_2$ or $H_2O_2$) represent the total number of reacting electrons involved in the reduction reaction, the diffusion coefficient, and the concentration of $O_2$ and $H_2O_2$ in the solution, respectively. tp represents the pulse width. f(nj, Dj, tp) is given by the following equation:

$$f(nj, Dj, tp) = nj\ FA(Dj/\pi tp)^{1/2} \quad (4),$$

where F denotes the Faraday constant, and A is the electrode surface area of the monitor electrode. By inserting Equations (2) and (3) into Equation (1), the limiting current value is obtained:

$$I^{NP}_{(O_2+H_2O_2)} = f\left(n_{O_2}, D_{O_2}, tp\right)C_{O_2} + f\left(n_{H_2O_2}, D_{H_2O_2}, tp\right)C_{H_2O_2} \quad (5)$$

Therefore, the normal pulse voltammetry in the reducing direction of a solution containing both $O_2$ and $H_2O_2$ of unknown concentration gives the current/ voltage curve of the form shown in Figure 5 (c), and the observed diffusion limiting current can be expressed in Equation (5), where $I^{NP}_{(O_2+H_2O_2)}$ denotes the observed diffusion limiting current, and f(nj, Dj, tp) represents a function which can be defined when the experimental conditions employed are known. Therefore, Equation (5) turns out to be a two-dimensional first order equation containing two unknown variables, $C_{O_2}$ and $C_{H_2O_2}$.

The peak current value $I^{DP}_{(O_2+H_2O_2)}$ which is measured by differential pulse voltammetry for the reduction of a solution containing both $O_2$ and $H_2O_2$ of unknown concentrations is given by the following equation:

$$I^{DP}_{(O_2+H_2O_2)} = g\left(n_{O_2}, D_{O_2}, tp, .....\right)C_{O_2} + g\left(n_{H_2O_2}, D_{H_2O_2}, tp, .....\right)C_{H_2O_2} \quad (6).$$

As discussed in Journal of Electroanalytical Chemistry, 175 (1984) pp 1-13, g(nj, Dj, tp, ...) represents a family of functions entirely different from equation (4) containing f(nj, Dj, tp). Thus, the measured peak current valve $I^{DP}_{(O_2+H_2O_2)}$ is clearly different from $I^{NP}_{(O_2+H_2O_2)}$.

Since g(nj, Dj, tp, ...) is determined by setting measurement parameters and experimental conditions, Equation (6) constitutes a two-dimensional first-order equation independent of Equations (5), containing the unknown variables $C_{O_2}$ and $C_{H_2O_2}$. Therefore, the solutions $C_{O_2}$ and $C_{H_2O_2}$ of the set of linear equations (5) and (6) are given by the following equations:

$$C_{O_2}=\frac{\begin{vmatrix} I^{NP}_{(O_2+H_2O_2)} & f(n_{H_2O_2}, D_{H_2O_2}, t_P) \\ I^{DP}_{(O_2+H_2O_2)} & g(n_{H_2O_2}, D_{H_2O_2}, t_P, \cdots) \end{vmatrix}}{\begin{vmatrix} f(n_{O_2}, D_{O_2}, t_P) & f(n_{H_2O_2}, D_{H_2O_2}, t_P) \\ g(n_{O_2}, D_{O_2}, t_P, \cdots) & g(n_{H_2O_2}, D_{H_2O_2}, t_P, \cdots) \end{vmatrix}} \cdots (7)$$

$$C_{H_2O_2}=\frac{\begin{vmatrix} f(n_{O_2}, D_{O_2}, t_P) & I^{NP}_{(O_2+H_2O_2)} \\ g(n_{O_2}, D_{O_2}, t_P, \cdots) & I^{DP}_{(O_2+H_2O_2)} \end{vmatrix}}{\begin{vmatrix} f(n_{O_2}, D_{O_2}, t_P) & f(n_{H_2O_2}, D_{H_2O_2}, t_P) \\ g(n_{O_2}, D_{O_2}, t_P, \cdots) & g(n_{H_2O_2}, D_{H_2O_2}, t_P, \cdots) \end{vmatrix}} \cdots (8)$$

Consequently, if there is an overlap between the current/voltage curves of two kinds of measured substances of unknown concentrations, their concentrations can be determined by the above method by measuring the electrolysis current values by using two kinds of voltammetry, necessary for setting up two independent equations. It follows, then, that if 3 kinds, 4 kinds, or 5 kinds of substances to be measured are electrolyzed in approximately the same voltage range, and if their electrolysis current components are observed as overlapping values, by combined use of 3 to 5 kinds of voltammetries, the concentrations of the individual measured substances can be determined.

These analytical processes are handled in the potentiostat-electrochemical interface 15 and the CPU 16 (computer CPU and auto-control unit), and water quality control is achieved by comparing these analytical results with the standard values and controlling the gas/chemical injection system 17.

Of the various pulse voltammetries, those of which can be obtained limiting current values include reverse pulse voltammetry, in addition to normal pulse voltammetry.

Those of which can be obtained peak current values include differential normal pulse voltammetry and square-wave pulse voltammetry, in addition to differential pulse voltammetry.

Figures 16 - 19 show the voltage-time waveform signals for various pulse voltammetries.

Example 2

Example 2 is designed to study appropriate reactor water quality management conditions by use of low distortion speed stretching tests, in order to study the limiting voltage and limiting electric conductivity at which intergranular stress corrosion cracking (IGSCC) ceases to occur; using the data thus obtained, in this embodiment the reactor water environment is controlled with a system shown in Figures 1 through 4 in order to inhibit the occurrence of SCC.

Figure 7 shows the relationship between the sensitivity of SUS304 steel to IGSCC under the real reactor water environment, to which no hydrogen is supplied, the corrosion voltage, and the electric conductivity. In the figure, the solid line (limiting line) indicates the condition under which the occurrence of SCC was observed. As can be seen in Figure 7, the higher the corrosion voltage and the higher the electric conductivity, the greater is the likelihood of occurrence of an SCC.

To prevent the occurrence of SCC, in this invention the water quality conditions of the reactor water and of the primary cooling water system, especially the $H_2$ gas concentrations and their relationship to water quality, were controlled by constant monitoring, so that the corrosion voltage and the conductivity did remain in the SCC-inhibiting region lying below the curve shown in Figure 7.

Figure 8 shows the relationship between the sensitivity of SUS316 steel to IGSCC, the corrosion voltage, and the electric conductivity, under the same real reactor water environmental conditions as those described above. For comparison, the figure also provides the relationship between the limiting voltage and the limiting electric conductivity of SUS304 steel (solid line). As is evident from Figure 8, the limiting line at which SCC ceases to occur in SUS316 steel is in agreement with the limiting line at which SCC ceases to occur in SUS304 steel (Figure 7). SUS316 steel has the same SCC-inhibiting region as SUS304 region. Thus, it is demonstrated that the occurrence of SCC in SUS304 or SUS316 can be inhibited by using the same water quality control conditions.

Example 3

For determining the best water quality conditions, this embodiment was intended to evaluate the region in which SCC is likely to occur, using the concentrations of oxygen and hydrogen peroxide in the reactor water as parameters.

Figure 9 shows an $H_2O_2$ - $O_2$ correlation graph, indicating the sensitivity of structural materials to intergranular stress corrosion cracking (IGSCC) at 150°C. In Figure 9, "x" indicates the occurrence of IGSCC; "o" indicates the absence of IGSCC. As is evident from Figure 9, in regions in which the concentration of dissolved oxygen is higher than 0.1 ppm, the critical concentration of hydrogen peroxide necessary to inhibit the occurrence of IGSCC increases as the concentration of dissolved oxygen increases. Thus, it is clear that when a solution contains different chemical species dissolved there in, its SCC propensity cannot be evaluated on the basis of the corrosion voltage alone. In view of this fact, this embodiment, as shown in the preceding Example 2, sets the corrosion voltage and conductivity in a range which inhibits the occurrence of IGSCC, and uses a system of the configuration shown in Figures 1 through 4, to constantly monitor $H_2O_2$, $O_2$, and $H_2$ so that the concentrations of $H_2O_2$ and $O_2$ will be kept within a range wherein the occurrence of IGSCC is inhibited, in order to control the water quality to prevent the IGSCC of materials.

Example 4

The purpose of Example 4 was to study the influence of the pH on SCC in order to identify optimal water quality conditions.

Figure 10 shows the influence of the pH and anions on the IGSCC of sensitized SUS304 steel in hot water containing 40 ppm of oxygen. When the pH is adjusted using sulphuric acid and ammonia water, in the neighborhood of pH 5, the amount of time until a material shows cracking is exceedingly short. In low pH regions, anions such as of sulphuric acid and salts show the same degree of corrosiveness relative to IGSCC; by contrast, carbonic acid shows low corrosiveness. Therefore, in this invention, when judged solely on the basis of the relationship between the pH and IGSCC, the occurrence of IGSCC can be prevented by maintaining a high pH, as indicated in the figure.

Example 4 demonstrates that the occurrence of IGSCC can be prevented by adjusting the pH of the solution within the range of 7 - 7.5, using the system of the present invention.

Example 5

This Example was intended to study, using the techniques developed in this invention, the influence of the corrosion voltage on the speed of fracture, in order to control the water quality, based on the data thus obtained, so as to ensure a system having optimal corrosion voltage.

Figure 11 shows the results of evaluating the influence of the corrosion voltage on the speed of fracture development in sensitized SUS304 steel. When the corrosion voltage is set below -230 mV vs.SHE, the speed of fracture development becomes exceedingly slow, virtually eliminating SCC. Figure 12 shows the results of controlling this system to maintain a corrosion voltage of less than -230 mV by supplying $H_2$ gas from the gas/chemical supply system 17. The corrosion voltage was controlled by controlling the amount of dissolved hydrogen, using the system of the present invention.

Since the corrosion voltage falls below - 230 mV if the quantity of dissolved hydrogen under a steady state is maintained in the 150 - 200 ppb range, the quantity of hydrogen was maintained in this range by feeding back the observed concentration of dissolved $H_2$ to the system and by regulating the amount of hydrogen gas which was blown into the solution from the gas/chemical supply system 17.

Example 6

In this Example 6, the water quality control system shown in Figures 1 through 4 was used to achieve comprehensive

water quality control by monitoring the above-described dissolved $O_2$ concentration, $H_2O_2$ concentration, pH, corrosion voltage, conductivity, and dissolved $H_2$ concentration.

By controlling the water quality parameters to maintain the optimal water quality conditions shown in Example 5 above, such as dissolved $O_2$ concentration: 10 - 50 ppb; $H_2O_2$ concentration: 10 - 50 ppb; pH: 7 - 8; corrosion voltage: -230 mV vs. SHE or lower; and dissolved $H_2$ concentration: 150 - 200 ppb, a system could be successfully constructed capable of achieving an overall reduction in the amount of corrosion and prevention of IGSCC.

Figure 13 shows the results of monitoring and controlling the concentrations of dissolved $O_2$, $H_2O_2$, and $H_2$, pH, corrosion voltage, conductivity, and the concentration of iron ions, using the present water quality control system during the operation of a simulated nuclear power plant. All values are within the range of optimal conditions, namely, the water quality conditions satisfying the standard values, confirming that the system was operating properly. The concentration of iron ions detected by the simultaneous quantitative in situ analysis equipment system was below 5 ppb.

EFFECTS OF THE INVENTION

This invention allows simultaneous the quantitative in situ analysis of various chemical species found in the cooling water system and the reactor water in nuclear power plants, allowing on-the-spot water quality monitoring of the reactor water and cooling system.

Further, the invention allows an overall evaluation of the water quality by correlating the water quality monitoring, analytical results, and the pH, voltage, and electric conductivity of the reactor water, e.g. at various locations of the water cooling system.

Further, the above effects can be advantageously achieved with a computer and a calculation processing system, allowing a fast, accurate and automated water quality control.

## Claims

**1.** Method for the quantitative analysis of solutions, comprising the steps of

- contacting a working electrode, a counterelectrode and a reference electrode in an electrolytic cell with a solution to be tested containing a plurality of chemical species,
- electrolyzing the solution by applying different voltages for the chemical species to be analyzed to the electrolytic cell;
- determining current values, according to the kind of voltammetry employed, from the electrolysis current resulting from the above electrolysis step, and
- calculating the concentrations of the plurality of chemical species to be analyzed, based on the current values thus determined;

characterized in that

- in the electrolyzing step different voltage-time waveform signals for the chemical species to be analyzed are applied,
- in the determining step limiting current or peak current values and the voltage required to produce the electrolysis currents are determined, and
- in the computing step the concentrations are computed based on the limiting current or peak current values.

**2.** Method according to claim 1,

characterized in that
the voltage-time waveform signals applied to the electrolytic cell are pulse-mode voltage-time waveform signals.

**3.** Method according to claim 1 or 2,

characterized in that
the solution to be tested is a solution containing chemical species of at least one of $H_2$ and $O_2$ and also $H_2O_2$ which are to be analyzed simultaneously.

**4.** Method according to one of the claims 1 to 3,

characterized in that
the waveform signals are normal pulse voltammetry voltage-time waveform signals and differential pulse voltammetry voltage-time waveform signals; and the concentration of $H_2$ or $O_2$ and the concentration of $H_2O_2$ are calculated based on the limiting current values resulting from the normal pulse voltammetry and the peak current values resulting from the differential pulse voltammetry, based on the electrolysis current resulting from the electrolysis step and the voltage required to produce the electrolysis current.

**5.** Method according to one of the claims 1 to 4,

characterized in that
reactor water in a primary cooling system in a nuclear reactor is analyzed.

**6.** Method according to claim 5,

characterized in that
the reactor water is brought into contact with the three electrodes in the electrolytic cell through a hydrophobic gas-permeable membrane.

**7.** Method according to claim 5 or 6,

characterized in that
the three electrodes in the electrolytic cell are brought into contact with the reactor water in the reactor by installing them in an in-reactor instrumentation column in the nuclear reactor.

**8.** Apparatus for the quantitative analysis of solutions, particularly for carrying out the method according to claims 1 to 7, comprising

- an electrolytic cell (2) for electrolyzing the solution to be tested, the cell being provided with a working electrode (4), a counter electrode (3) and a reference electrode (5);
- voltage application means (15) for applying different voltage signals having specified parameters determined by the kind of voltammetry employed, to the working electrode in said electrolytic cell as reference electrode standard voltage,
- current determination means for determining currents obtained by electrolyzing the sample, and
- concentration calculation means (16) for calculating the concentrations of the chemical species to be analyzed, based on the current values thus obtained;

characterized in that

- the voltage application means (15) apply different voltage-time waveform signals for the chemical species to be analyzed,
- the current determination means determine limiting current or peak current values based on the currents obtained by electrolyzing the sample, and
- the concentration calculation means (16) calculate the concentrations based on the limiting current or peak current values.

**9.** Apparatus according to claim 8,

characterized in that
the solution to be tested is a solution containing chemical species of $H_2O_2$ and either $H_2$ or $O_2$ which are to be analyzed simultaneously.

**10.** Apparatus according to claim 8,

characterized in that
the solution to be tested is a solution containing chemical species of $H_2$, $O_2$ and $H_2O_2$ which are to be analyzed simultaneously.

**11.** Apparatus according to one of the claims 8 to 10,

characterized in that
the waveform signals are pulse-mode voltage-time waveform signals.

**12.** Apparatus according to one of the claims 8 to 11,

characterized in that
also $H_2$ is to be analyzed, and the voltage application means (15) for applying voltage-time waveform signals are means for applying two types of pulse-mode voltage-time waveform signals comprising normal pulse waveform signals and differential pulse waveform signals.

**13.** Apparatus according to one of the claims 8 to 12,

characterized in that
also $O_2$ is to be analyzed, and the voltage application means (15) are means for applying two types of pulsemode voltage-time waveform signals comprising normal pulse waveform signals and differential pulse waveform signals, and the current determination means determine limiting current values, based on the electrolysis current obtained by applying the above normal pulse waveform signals and the voltage required to produce said electrolysis current, and peak current values, based on the electrolysis current obtained by applying the above differential pulse waveform signals and the voltage required to produce said electrolysis current.

**14.** Apparatus according to one of the claims 8 to 13,

characterized in that
the voltage application means comprise a potentiostat and a CPU (16), comprising a signal discharge unit for applying voltage-time waveform signals which are put in from the CPU to the working electrode in the electrolytic cell, the CPU being provided with a signal input unit for entering voltage-time waveform signals, having specified parameters which are determined by the kind of voltammetry employed, in the potentiostat; and it further comprises a storage unit which stores in a memory the results of the voltammetry performed by the potentiostat, for each chemical species to be analyzed and present in the test solution, as a relationship between the resulting electrolysis current and the voltage required to produce it, wherein the current determination means are a current value determination unit which processes the data stored in the storage unit.

**15.** Apparatus according to claim 14,

characterized in that
the solution to be tested is a solution containing either $H_2$ or $O_2$ and $H_2O_2$ which are to be analyzed simultaneously,
the voltage-time waveform signals are voltage-time waveform signals for normal pulse voltammetry having input parameters, and those for differential pulse voltammetry, and
the current value determination unit determines the limiting current of the normal pulse voltammetry and the peak current of the differential pulse voltammetry by treating the data stored in the storage unit.

**16.** Apparatus according to claim 14 or 15,

characterized in that
three kinds of voltage-time waveform signals are applied to the electrolytic cell from the potentiostat, all comprising pulse-mode waveform signals.

**17.** Nuclear reactor water quality control system,

comprising analysis means for performing a quantitative analysis of the reactor water in the primary cooling system of a nuclear reactor (1) based on electrolysis, and reactor water control means (13, 17) for controlling the water quality of the reactor water based on the results obtained from the analysis means,
characterized in that
the analysis means are an apparatus according to one of the claims 8 to 16, and the reactor water control means (13, 17) control the water quality of the reactor water based on the concentrations calculated in the analysis means.

**18.** System according to claim 17,

characterized in that
the electrolytic cell is installed in the reactor core (10) of the nuclear reactor.

**19.** System according to claim 17,

characterized in that
the electrolytic cell is installed in a reactor instrumentation column (14) in the nuclear reactor.

**20.** System according to claim 17,

characterized in that
the electrolytic cell is installed on the reactor core outlet side of the primary cooling system.

**21.** System according to claim 17,

characterized in that
the electrolytic cell is installed in the water vapor separator unit in the reactor.

**22.** System according to one of the claims 17 to 21,

characterized in that
the reactor water control means comprise means (17) for regulating the amount of $H_2$ gas that is injected into the primary cooling system.

**23.** System according to one of the claims 17 to 21,

characterized in that
the reactor water control means comprise means for regulating the amount of $N_2H_4$ that is injected into the water vapor generator in the reactor.

**24.** System according to claim 23,

characterized in that
the quantity of $N_2H_4$ that is injected into the water vapor generator is based on the quantitative analysis of dissolved $O_2$ gas in the primary cooling system, computed by the concentration calculation means.

**25.** System according to one of the claims 17 to 24,

characterized in that it further comprises
a concentration comparison unit which compares the results from the concentration calculation means with standard values, and the reactor water control means control the water quality of the reactor water based on the information produced by the concentration comparison unit.

**26.** System according to claim 25,

characterized in that
the concentration comparison unit compares the dissolved amount of at least one of $H_2$, $O_2$ and $H_2O_2$ in the primary cooling water with standard values, and means are provided for regulating the quantity of at least one of $H_2$, $O_2$ and $H_2O_2$, that is injected into the reactor water based on the information produced by the concentration comparison unit.

**27.** System according to one of the claims 17 to 26,

characterized in that
the concentration calculation means form equations in which the concentrations of the substances measured, and present in the reactor water, are treated as unknown variables, based on the limiting current or peak current

values determined by the current determination means, and calculate the concentrations of the substances by solving the set of equations.

**28.** System according to one of the claims 17 to 27,

characterized in that
it further comprises measuring means for measuring at least one of reactor water conductivity, pH and electric potential at sampling points in the primary cooling system; a further comparison unit which compares the results of the measurements with standard values; and the reactor water control means regulate the water quality in the reactor water based on the information produced by the further comparison unit and the concentration comparison unit.

**29.** System according to one of the claims 17 to 28,

characterized in that it further comprises alarm generation means which generate an alarm when the results from the concentration calculation means exceed a standard value.

**30.** System according to one of the claims 17 to 29,

characterized in that it is adapted to measure the concentrations of $SO_4^{2-}$, $SO_3^-$, $Cl^-$ and $Na^+$ ions which are decomposition products of the nuclear reactor cleaning chemical resins in the primary cooling system; and the alarm generating means generating an alarm when any one of the ionic concentrations exceeds a standard value.

**31.** System according to one of the claims 25 to 30,

characterized in that
the concentration comparison unit converts concentration values produced by the concentration calculation means into electric conductivity values and compares them with standard values, and the reactor water control means regulate the water quality in the reactor water by maintaining said converted values below standard values.

**32.** System according to one of the claims 17 to 31

characterized in that it comprises a function generator between the signal discharge unit and the signal input unit, and the waveform signals produced by the signal input unit are entered in the signal discharge unit through the function generator.

**33.** System according to one of the claims 25 to 32,

characterized in that it further comprises prediction means for predicting potential accidents in the primary cooling system based on the information produced by the concentration comparison unit, and the alarm generation means generate an alarm based on that prediction.

**34.** System according to one of the claims 25 to 33,

characterized in that
the system comprises a monitoring system which monitors the proper operation of the voltage application means, the concentration calculation means and the concentration comparison unit.

**35.** System according to claim 34,

characterized in that
the alarm generating means generate an alarm in the event that a malfunction is detected by the monitoring system.

**36.** System according to one of the claims 17 to 35,

characterized in that
the nuclear reactor is a boiling water nuclear reactor or a pressurized water nuclear reactor.

## Patentansprüche

**1.** Verfahren zur quantitativen Analyse von Lösungen,
das folgende Schritte umfaßt:

- Inkontaktbringen einer Arbeitselektrode, einer Gegenelektrode und einer Bezugselektrode in einer Elektrolysezelle mit einer zu untersuchenden Lösung, die mehrere chemische Species enthält,
- Elektrolysieren der Lösung durch Anlegen unterschiedlicher Spannungen für die zu analysierenden Species an die Elektrolysezelle,
- Ermittlung von Stromwerten in Abhängigkeit von der Art der angewandten Voltammetrie aus dem vom obigen Elektrolyseschritt resultierenden Elektrolysestrom und
- Berechnung der Konzentration der zu analysierenden mehreren chemischen Species auf der Basis der so ermittelten Stromwerte,

**dadurch gekennzeichnet,** daß

- im Elektrolyseschritt unterschiedliche Spannungs-Zeit-Wellenformsignale für die zu analysierenden Species angewandt werden,
- im Schritt der Ermittlung von Stromwerten Grenzstromwerte oder Spitzenstromwerte und die zur Erzeugung der Elektrolyseströme erforderliche Spannung bestimmt werden
und
- im Berechnungsschritt die Konzentrationen auf der Basis der Grenzstromwerte oder der Spitzenstromwerte berechnet werden.

**2.** Verfahren nach Anspruch 1,

dadurch gekennzeichnet, daß
die an die Elektrolysezelle angelegten Spannungs-Zeit-Wellenformsignale gepulste Spannungs-Zeit-Wellenformsignale sind.

**3.** Verfahren nach Anspruch 1 oder 2,

dadurch gekennzeichnet, daß
die zu untersuchende Lösung eine Lösung ist, welche die chemischen Species $H_2$ und/oder $O_2$ sowie $H_2O_2$ enthält, die zugleich analysiert werden sollen.

**4.** Verfahren nach einem der Ansprüche 1 bis 3,

dadurch gekennzeichnet, daß
die Wellenformsignale Spannungs-Zeit-Wellenformsignale der normalen Pulsvoltammetrie sowie Spannungs-Zeit-Wellenformsignale der differentiellen Pulsvoltammetrie sind und die Konzentration von $H_2$ oder $O_2$ und die Konzentration von $H_2O_2$ aus den von der normalen Pulsvoltammetrie herrührenden Grenzstromwerten und den von der differentiellen Pulsvoltammetrie herrührenden Spitzenstromwerten auf der Basis des aus dem Elektrolyseschritt resultierenden Elektrolysestroms und der zur Erzeugung des Elektrolysestroms erforderlichen Spannung berechnet werden.

**5.** Verfahren nach einem der Ansprüche 1 bis 4,

dadurch gekennzeichnet, daß
Reaktorwasser im Primärkühlsystem eines Kernreaktors analysiert wird.

**6.** Verfahren nach Anspruch 5,

dadurch gekennzeichnet, daß

das Reaktorwasser durch eine hydrophobe gasdurchlässige Membran hindurch mit den drei Elektroden in der Elektrolysezelle in Kontakt gebracht wird.

**7.** Verfahren nach Anspruch 5 oder 6,

dadurch gekennzeichnet, daß
die drei Elektroden in der Elektrolysezelle durch Installation in einem im Reaktorinneren vorgesehenen Meßgeräterohr im Kernreaktor mit dem im Reaktor befindlichen Reaktorwasser in Kontakt gebracht werden.

**8.** Vorrichtung zur quantitativen Analyse von Lösungen, insbesondere zur Durchführung des Verfahrens nach den Ansprüchen 1 bis 7, die aufweist:

- Eine Elektrolysezelle (2) zur Elektrolyse der zu untersuchenden Lösung, die eine Arbeitselektrode (4), eine Gegenelektrode (3) und eine Bezugselektrode (5) aufweist,
- eine Spannungsversorgungseinrichtung (15) zum Anlegen unterschiedlicher Spannungssignale mit spezifizierten Parametern, die durch die Art der angewandten Voltammetrie bestimmt sind, an die Arbeitselektrode in der Elektrolysezelle als Bezugselektroden-Standardspannung,
- eine Stromermittlungseinrichtung zur Ermittlung der bei der Elektrolyse der Probe erhaltenen Ströme und
- eine Konzentrationsberechnungseinrichtung (16) zur Berechnung der Konzentrationen der zu analysierenden chemischen Species auf der Basis der so erhaltenen Stromwerte,

dadurch gekennzeichnet, daß

- die Spannungsversorgungseinrichtung (15) unterschiedliche Spannungs-Zeit-Wellenformsignale für die zu analysierenden chemischen Species anlegt,
- die Stromermittlungseinrichtung Grenzstromwerte oder Spitzenstromwerte auf der Basis der durch die Elektrolyse der Probe erhaltenen Stromwerte ermittelt, und
- die Konzentrationsberechnungseinrichtung (16) die Konzentrationen auf der Basis der Grenzstromwerte oder der Spitzenstromwerte berechnet.

**9.** Vorrichtung nach Anspruch 8,

dadurch gekennzeichnet, daß
die zu untersuchende Lösung eine Lösung ist, welche die chemischen Species $H_2O_2$ sowie $H_2$ und/oder $O_2$ enthält, die zugleich analysiert werden sollen.

**10.** Vorrichtung nach Anspruch 8,

dadurch gekennzeichnet, daß
die zu untersuchende Lösung eine Lösung ist, welche die chemischen Species $H_2$, $O_2$ und $H_2O_2$ enthält, die zugleich analysiert werden sollen.

**11.** Vorrichtung nach einem der Ansprüche 8 bis 10,

dadurch gekennzeichnet, daß
die Wellenformsignale gepulste Spannungs-Zeit-Wellenformsignale sind.

**12.** Vorrichtung nach einem der Ansprüche 8 bis 11,

dadurch gekennzeichnet, daß
ferner auch $H_2$ analysiert werden soll und die Spannungsversorgungseinrichtung (15) zum Anlegen von Spannungs-Zeit-Wellenformsignalen eine Einrichtung zum Anlegen von zwei Arten gepulster Spannungs-Zeit-Wellenformsignale ist, die normale Pulswellenformsignale und differentielle Pulswellenformsignale umfassen.

**13.** Vorrichtung nach einem der Ansprüche 8 bis 12,

dadurch gekennzeichnet, daß
ferner $O_2$ analysiert werden soll und die Spannungsversorgungseinrichtung (15) eine Einrichtung zum Anlegen

von zwei Arten gepulster Spannungs-Zeit-Wellenformsignale ist, die normale gepulste Wellenformsignale und differentielle gepulste Wellenformsignale umfassen, und die Stromermittlungseinrichtung Grenzstromwerte auf der Basis des durch Anlegen der obigen normalen gepulsten Wellenformsignale erhaltenen Elektrolysestroms und der zur Erzeugung dieses Elektrolysestroms erforderlichen Spannung sowie Spitzenwerte auf der Basis des durch Anlegen der obigen differentiellen gepulsten Wellenformsignale erhaltenen Elektrolysestroms und der zur Erzeugung dieses Elektrolysestroms erforderlichen Spannung ermittelt.

**14.** Vorrichtung nach einem der Ansprüche 8 bis 13,

dadurch gekennzeichnet, daß
die Spannungsversorgungseinrichtung einen Potentiostaten und eine CPU (16) umfaßt, die eine Signalabgabeeinheit zum Anlegen von Spannungs-Zeit-Wellenformsignalen aufweist, die von der CPU an die Arbeitselektrode in der Elektrolysezelle angelegt werden, wobei die CPU mit einer Signaleingabeeinheit zur Eingabe von Spannungs-Zeit-Wellenformsignalen mit spezifischen Parametern in den Potentiostaten versehen ist, die durch die Art der angewandten Voltammetrie bestimmt werden, und die Vorrichtung ferner eine Speichereinheit aufweist, welche die Ergebnisse der durch den Potentiostaten durchgeführten Voltammetrie für jede zu analysierende, in der zur untersuchenden Lösung vorliegende chemische Species als Beziehung zwischen dem resultierenden Elektrolysestrom und der zu seiner Erzeugung erforderlichen Spannung in einem Speicher speichert, wobei die Stromermittlungseinrichtung eine Stromermittlungseinheit ist, welche die in der Speichereinheit gespeicherten Daten verarbeitet.

**15.** Vorrichtung nach Anspruch 14,

dadurch gekennzeichnet, daß
die zu untersuchende Lösung eine Lösung ist, welche entweder $H_2$ oder $O_2$ sowie $H_2O_2$ enthält, die zugleich zu analysieren sind,
die Spannungs-Zeit-Wellenformsignale Spannungs-Zeit-Wellenformsignale für normale Pulsvoltammetrie mit Eingabeparametern sowie Spannungs-Zeit-Wellenformsignale für differentielle Pulsvoltammetrie darstellen und
die Stromermittlungseinrichtung den Grenzstrom bei der normalen Pulsvoltammetrie und den Spitzenstrom bei der differentiellen Pulsvoltammetrie durch Verarbeitung der in der Speichereinheit gespeicherten Daten ermittelt.

**16.** Vorrichtung nach Anspruch 14 oder 15,

dadurch gekennzeichnet, daß
drei Arten von Spannungs-Zeit-Wellenformsignalen vom Potentiostaten an die Elektrolysezelle angelegt werden, die sämtlich gepulste Wellenformsignale darstellen.

**17.** System zur Kontrolle der Qualität des Wassers von Kernreaktoren,

das eine Analysiereinrichtung zur Durchführung einer quantitativen Analyse des Reaktorwassers im Primärkühlsystem eines Kernreaktors (1) auf der Basis einer Elektrolyse sowie eine Reaktorwasser-Kontrolleinrichtung (13, 17) zur Steuerung der Qualität des Reaktorwassers auf der Basis der von der Analysiereinrichtung erhaltenen Ergebnisse aufweist,
dadurch gekennzeichnet, daß
die Analysiereinrichtung eine Vorrichtung nach einem der Ansprüche 8 bis 16 ist und die Reaktorwasser-Kontrolleinrichtung (13, 17) die Qualität des Reaktorwassers auf der Basis der in der Analysiereinrichtung berechneten Konzentrationen steuert.

**18.** System nach Anspruch 17,

dadurch gekennzeichnet, daß
die Elektrolysezelle im Reaktorcore (10) des Kernreaktors installiert ist.

**19.** System nach Anspruch 17,

dadurch gekennzeichnet, daß

die Elektrolysezelle in einem im Kernreaktor vorgesehenen Meßgeräterohr installiert ist.

**20.** System nach Anspruch 17,

dadurch gekennzeichnet, daß
die Elektrolysezelle an der Auslaßseite des Reaktorcores im Primärkühlsystem installiert ist.

**21.** System nach Anspruch 17,

dadurch gekennzeichnet, daß
die Elektrolysezlle in der Wasserdampf-Abscheideeinheit im Reaktor installiert ist.

**22.** System nach einem der Ansprüche 17 bis 21,

dadurch gekennzeichnet, daß
die Reaktorwasser-Kontrolleinrichtung eine Steuereinrichtung (17) zur Steuerung der Menge an $H_2$-Gas aufweist, das in das Primärkühlsystem eingeführt wird.

**23.** System nach einem der Ansprüche 17 bis 21,

dadurch gekennzeichnet, daß
die Reaktorwasser-Kontrolleinrichtung eine Steuereinrichtung zur Steuerung der Menge an $N_2H_4$ aufweist, das in den Wasserdampferzeuger im Reaktor eingeführt wird.

**24.** System nach Anspruch 23,

dadurch gekennzeichnet, daß
die Menge an $N_2H_4$, das in den Wasserdampferzeuger eingeführt wird, auf der quantitativen Analyse von gelöstem $O_2$-Gas im Primärkühlsystem aufgrund der Berechnung durch die Konzentrationsberechnungseinrichtung beruht.

**25.** System nach einem der Ansprüche 17 bis 24,

dadurch gekennzeichnet, daß
es ferner eine Konzentrationsvergleichseinheit aufweist, welche die Ergebnisse von der Konzentrationsberechnungseinrichtung mit Standardwerten vergleicht, und die Reaktorwasser-Kontrolleinrichtung die Qualität des Reaktorwassers auf der Basis der von der Konzentrationsvergleichseinheit erzeugten Information steuert.

**26.** System nach Anspruch 25,

dadurch gekennzeichnet, daß
die Konzentrationsvergleichseinheit die gelöste Menge an $H_2$, $O_2$ und/oder $H_2O_2$ im Primärkühlwasser mit Standardwerten vergleicht und eine Steuereinrichtung zur Steuerung der Menge an $H_2$, $O_2$ und/oder $H_2O_2$ vorgesehen ist, die auf der Basis der von der Konzentrationsvergleichseinheit erzeugten Information in das Reaktorwasser eingeführt wird.

**27.** System nach einem der Ansprüche 17 bis 26,

dadurch gekennzeichnet, daß
die Konzentrationsberechnungseinrichtung Gleichungen aufstellt, in denen die Konzentrationen der gemessenen und im Reaktorwasser vorliegenden Substanzen als unbekannte Variable auf der Basis der durch die Stromermittlungseinrichtung ermittelten Grenzstromwerte oder Spitzenstromwerte behandelt werden, und die Konzentrationen der Substanzen durch Lösung des Satzes von Gleichungen berechnet.

**28.** System nach einem der Ansprüche 17 bis 27,

dadurch gekennzeichnet, daß
es ferner eine Meßeinrichtung zur Messung der Leitfähigkeit, des pH-Werts und/oder des elektrischen Potentials des Reaktorwassers an Probenstellen im Primärkühlsystem sowie eine weitere Vergleichseinheit, welche die Ergebnisse der Messungen mit Standardwerten vergleicht, aufweist und die Reaktorwasser-Kontrolleinrichtung die Qualität des Reaktorwassers auf der Basis der von der weiteren Vergleichseinheit und von der Konzentrationsvergleichseinheit erzeugten Information steuert.

**29.** System nach einem der Ansprüche 17 bis 28,

dadurch gekennzeichnet, daß
es ferner eine Alarmerzeugungseinrichtung aufweist, die einen Alarm erzeugt, wenn die Ergebnisse von der Konzentrationsberechnungseinrichtung einen Standardwert überschreiten.

**30.** System nach einem der Ansprüche 17 bis 29,

dadurch gekennzeichnet, daß
es zur Messung der Konzentration der Ionen $SO_4^{2-}$, $SO^{2-}{}_3$, $Cl^-$ und $Na^+$ ausgelegt ist, die Zersetzungsprodukte der zur Reinigung des Kernreaktors dienenden Kunstharze im Primärkühlsystem darstellen, und die Alarmerzeugungseinrichtung einen Alarm erzeugt, wenn eine der Ionenkonzentrationen einen Standardwert überschreitet.

**31.** System nach einem der Ansprüche 25 bis 30,

dadurch gekennzeichnet, daß
die Konzentrationsvergleichseinheit von der Konzentrationsberechnungseinrichtung erzeugte Konzentrationswerte in Werte der elektrischen Leitfähigkeit umwandelt und sie mit Standardwerten vergleicht und die Reaktorwasser-Steuereinrichtung die Qualität des Reaktorwassers so steuert, daß diese umgewandelten Werte unterhalb von Standardwerten gehalten werden.

**32.** System nach einem der Ansprüche 17 bis 31,

dadurch gekennzeichnet, daß
es einen Funktionsgenerator zwischen der Signalabgabeeinheit und der Signaleingabeeinheit aufweist und die durch die Signaleeingabeeinheit erzeugten Wellenformsignale durch den Funktionsgenerator in die Signalabgabeeinheit eingeführt werden.

**33.** System nach einem der Ansprüche 25 bis 32,

dadurch gekennzeichnet, daß
es ferner eine Vorhersageeinrichtung zur Vorhersage möglicher Unfälle im Primärkühlsystem auf der Basis der von der Konzentrationsvergleichseinheit erzeugten Information aufweist und die Alarmerzeugungseinrichtung auf der Basis dieser Vorhersage einen Alarm erzeugt.

**34.** System nach einem der Ansprüche 25 bis 33,

dadurch gekennzeichnet, daß
es ein Überwachungssystem aufweist, das den korrekten Betrieb der Spannungsversorgungseinrichtung, der Konzentrationsberechnungseinrichtung und der Konzentrationsvergleichseinheit überwacht.

**35.** System nach Anspruch 34,

dadurch gekennzeichnet, daß
die Alarmerzeugungseinrichtung einen Alarm erzeugt, wenn das Überwachungssystem eine Fehlfunktion erfaßt.

**36.** System nach einem der Ansprüche 17 bis 35,

dadurch gekennzeichnet, daß
der Kernreaktor ein Siedewasserreaktor oder ein Druckwasserreaktor ist.

## Revendications

1. Procédé pour l'analyse quantitative de solutions, comprenant les étapes consistant à

   - mettre une électrode de travail, une contre-électrode et une électrode de référence dans une cellule électrolytique, en contact avec une solution devant être testée et contenant une pluralité de substances chimiques,
   - électrolyser la solution en appliquant à la cellule électrolytique différentes tensions pour les substances chimiques à analyser;
   - déterminer des valeurs de courant, en fonction du type de mesure voltmétrique utilisée, à partir du courant d'électrolyse résultant de l'étape d'électrolyse ci-dessus, et
   - calculer les concentrations de la pluralité de substances chimiques à analyser, sur la base des valeurs de courant ainsi déterminées,

   caractérisé en ce que

   - lors de l'étape d'électrolyse, on applique des signaux ayant différentes formes d'ondes tension-temps pour les espaces chimiques à analyser,
   - lors de l'étape de détermination, on détermine des valeurs du courant limite ou du courant maximum et la tension requise pour produire les courants d'électrolyse, et
   - lors de l'étape de calcul, on calcule les concentrations sur la base des valeurs du courant limite ou du courant maximum.

2. Procédé selon la revendication 1, caractérisé en ce que les signaux des formes d'ondes tension-temps, appliqués à la cellule électrolytique, sont des signaux de formes d'ondes tension-temps à mode impulsionnel.

3. Procédé selon la revendication 1 ou 2, caractérisé en ce que la solution à tester est une solution contenant des substances chimiques comprenant $H_2$ et/ou $O_2$, et également $H_2O_2$, qui doivent être analysées simultanément.

4. Procédé selon l'une des revendications 1 à 3, caractérisé en ce que les signaux de formes d'ondes sont des signaux de formes d'ondes tension-temps fournis par une mesure voltmétrique à impulsions normales et des signaux de formes d'ondes tension-temps obtenus par mesure voltmétrique à impulsions différentielles; et la concentration de $H_2$ ou $O_2$ et la concentration de $H_2O_2$ sont calculées sur la base des valeurs du courant limite résultant de la mesure voltmétrique à impulsions normales et des valeurs de courant maximales résultant de la mesure voltmétrique à impulsions différentielles, sur la base du courant d'électrolyse résultant de l'étape d'électrolyse et de la tension requise pour produire le courant d'électrolyse.

5. Procédé selon l'une des revendications 1 à 4, caractérisé en ce qu'on analyse une eau de réacteur dans un circuit de refroidissement primaire d'un radiateur nucléaire.

6. Procédé selon la revendication 5, caractérisé en ce qu'on amène l'eau de réacteur en contact avec les trois électrodes dans la cellule électrolytique par l'intermédiaire d'une membrane hydrophobe perméable aux gaz.

7. Procédé selon la revendication 5 ou 6, caractérisé en ce qu'on place les trois électrodes de la cellule électrolytique en contact avec l'eau de réacteur dans le réacteur, en les mettant en place dans une colonne d'instrumentation interne au réacteur, dans le réacteur nucléaire.

8. Dispositif pour l'analyse quantitative de solutions, notamment pour la mise en oeuvre du procédé selon les revendications 1 à 7, comprenant

   - une cellule électrolytique (2) pour électrolyser la solution à tester, la cellule étant équipée d'une électrode de travail (4), d'une contre-électrode (3) et d'une électrode de référence (5);
   - des moyens d'application de tension (15) pour appliquer différents signaux de tension ayant des paramètres spécifiés, déterminés par le type de mesure voltmétrique utilisé, à l'électrode de travail dans ladite cellule électrolytique en tant que tension étalon de l'électrode de référence,
   - des moyens de détermination de courant pour déterminer des courants obtenus par électrolyse de l'échantillon, et
   - des moyens de calcul de concentrations (16) pour calculer les concentrations des substances chimiques à analyser, sur la base des valeurs de courant ainsi obtenues;

caractérisé en ce que

- les moyens d'application de tension (15) appliquent différents signaux de formes d'ondes tension-temps pour les substances chimiques à analyser,
- les moyens de détermination de courant déterminent les valeurs du courant limite ou du courant maximum sur la base des courants obtenus par l'électrolyse de l'échantillon, et
- les moyens de calcul de concentration (16) calculent les concentrations sur la base des valeurs du courant limite ou du courant maximum.

**9.** Dispositif selon la revendication 8, caractérisé en ce que la solution à tester est une solution contenant des substances chimiques de $H_2O_2$ et soit du $H_2$, soit du $O_2$, qui doivent être analysées simultanément.

**10.** Dispositif selon la revendication 8, caractérisé en ce que la solution à tester est une solution contenant des substances chimiques de $H_2$, $O_2$ et $H_2O_2$, qui doivent être analysées simultanément.

**11.** Dispositif selon l'une des revendications 8 à 10, caractérisé en ce que les signaux de formes d'ondes sont des signaux de formes d'ondes tension-temps à mode impulsionnel.

**12.** Dispositif selon l'une des revendications 8 à 11, caractérisé en ce qu'on analyse également du $H_2$ et que les moyens d'application de tension (15) servant à appliquer les signaux de formes d'ondes tension-temps sont des moyens pour appliquer deux types de signaux de formes d'ondes tension-temps à mode impulsionnel comprenant des signaux de formes d'ondes impulsionnelles normales et des signaux de formes d'ondes impulsionnelles différentielles.

**13.** Dispositif selon l'une des revendications 8 à 12, caractérisé en ce qu'on analyse également du $O_2$ et que les moyens d'application de tension (15) sont des moyens pour appliquer deux types de signaux de formes d'ondes tension-temps à mode impulsionnel comprenant des signaux de formes d'ondes impulsionnelles normales et des signaux de formes d'ondes impulsionnelles différentielles, et les moyens de détermination de courant déterminent des valeurs du courant limite, sur la base du courant d'électrolyse obtenu par application des signaux de formes d'ondes impulsionnelles normales indiqués précédemment de la tension nécessaire pour produire ledit courant d'électrolyse, et des valeurs du courant maximum basées sur le courant d'électrolyse obtenu par application des signaux de formes d'ondes impulsionnelles différentielles indiqués précédemment et de la tension requise pour produire ledit courant d'électrolyse.

**14.** Dispositif selon l'une des revendications 8 à 13, caractérisé en ce que

les moyens d'application de tension comprennent un potentiostat et une unité centrale CPU (16), comprenant une unité de décharge de signaux pour appliquer des signaux de formes d'ondes tension-temps, qui sont envoyés par l'unité centrale à l'électrode de travail dans la cellule électrolytique, l'unité centrale étant équipée d'une unité d'entrée de signaux permettant l'introduction de signaux de formes d'ondes tension-temps comportant des paramètres spécifiés, qui sont déterminés par le type de mesure voltmétrique utilisé, dans le potentiostat; et

qu'il comporte en outre une unité de mémoire qui mémorise dans une mémoire les résultats de la mesure voltmétrique exécutée par le potentiostat, pour chacune des substances chimiques à analyser et présentes dans la solution de test, en tant que relation entre le courant d'électrolyse résultant et la tension requise pour le produire, les moyens de détermination du courant étant constitués par une unité de détermination de la valeur du courant, qui traite les données mémorisées dans l'unité de mémoire.

**15.** Dispositif selon la revendication 14, caractérisé en ce que la solution à tester est une solution contenant soit du $H_2$, soit du $O_2$ et du $H_2O_2$, qui doivent être analysés simultanément,

les signaux de formes d'ondes tension-temps sont des signaux de formes d'ondes tension-temps pour une mesure voltmétrique à impulsions normales comportant des paramètres d'entrée, et des signaux de formes d'ondes tension-temps pour une mesure voltmétrique à impulsions différentielles,

l'unité de détermination de la valeur du courant détermine le courant limite de la mesure voltmétrique à impulsions normales et le courant maximum de la mesure voltmétrique à impulsions différentielles, par traitement des données mémorisées dans l'unité de mémoire.

16. Dispositif selon la revendication 14 ou 15, caractérisé en ce que trois types de signaux de formes d'ondes tension-temps sont appliqués à la cellule électrolytique à partir du potensiostat, tous comprenant des signaux de formes d'ondes à mode impulsionnel.

17. Système de contrôle de la qualité de l'eau dans un réacteur nucléaire, comprenant des moyens d'analyse pour exécuter une analyse quantitative de l'eau de réacteur dans le système de refroidissement primaire d'un réacteur nucléaire (1) sur la base d'une électrolyse, et des moyens (13,17) de contrôle de l'eau de réacteur pour contrôler la qualité de l'eau de réacteur sur la base des résultats fournis par les moyens d'analyse,

    caractérisé en ce que les moyens d'analyse sont un dispositif selon l'une des revendications 8 à 16, et les moyens (13,17) de contrôle de l'eau de réacteur contrôlent la qualité de l'eau de réacteur sur la base des concentrations calculées dans les moyens d'analyse.

18. Système selon la revendication 17, caractérisé en ce que la cellule électrolytique est installée dans le coeur (10) du réacteur nucléaire.

19. Système selon la revendication 17, caractérisé en ce que la cellule électrolytique est installée dans une colonne d'instrumentation de réacteur (14) dans le réacteur nucléaire.

20. Système selon la revendication 17, caractérisé en ce que la cellule électrolytique est installée sur le côté de sortie du coeur du réacteur du système de refroidissement primaire.

21. Système selon la revendication 17, caractérisé en ce que la cellule électrolytique est installée dans l'unité formant séparateur eau-vapeur dans le réacteur.

22. Système selon l'une quelconque des revendications 17 à 21, caractérisé en ce que les moyens de contrôle de l'eau de réacteur comprennent des moyens (17) pour régler la quantité de gaz $H_2$ qui est injectée dans le système de refroidissement primaire.

23. Système selon l'une des revendications 17 à 21, caractérisé en ce que les moyens de contrôle de l'eau de réacteur comprennent des moyens pour régler la quantité de $N_2H_4$ qui est injectée dans le générateur de vapeur d'eau dans le réacteur.

24. Système selon la revendication 23, caractérisé en ce que la quantité de $N_2H_4$, qui est injectée dans le générateur de vapeur d'eau, est basée sur l'analyse quantitative de gaz $O_2$ dissous dans le système de refroidissement primaire, calculée par les moyens de calcul de concentration.

25. Système selon l'une des revendications 17 à 24, caractérisé en ce qu'il comporte en outre une unité de comparaison de concentration qui compare les résultats délivrés par les moyens de calcul de concentration à des valeurs standards, et les moyens de contrôle de l'eau de réacteur contrôlent la qualité de l'eau de réacteur sur la base de l'information produite par l'unité de comparaison de concentration.

26. Système selon la revendication 25, caractérisé en ce que l'unité de comparaison de concentration compare la quantité dissoute d'au moins l'un de $H_2$, $O_2$ et $H_2O_2$ dans l'eau de refroidissement primaire à des valeurs standards, et que des moyens sont prévus pour régler la quantité d'au moins l'un de $H_2$, $O_2$ et $H_2O_2$, qui est injectée dans l'eau de réacteur sur la base de l'information fournie par l'unité de comparaison de concentration.

27. Système selon l'une des revendications 17 à 26, caractérisé en ce que les moyens de calcul de concentration forment des équations dans lesquelles les concentrations des substances mesurées, présentes dans l'eau de réacteur, sont traitées en tant que variables inconnues, sur la base des valeurs du courant limite ou du courant maximum, déterminées par les moyens de détermination de courant, et calculent les concentrations des substances en résolvant l'ensemble d'équations.

28. Système selon l'une des revendications 17 à 27, caractérisé en ce qu'il comporte en outre des moyens de mesure pour mesurer la conductivité de l'eau de réacteur et/ou le pH et/ou le potentiel électrique en des points d'échantillonnage du circuit de refroidissement primaire; une autre unité de comparaison qui compare les résultats des mesures à des valeurs standards; et les moyens de contrôle de l'eau de réacteur règlent la qualité de l'eau de réacteur sur la base de l'information produite par l'autre unité de comparaison et l'unité de comparaison de concentration.

**29.** Système selon l'une des revendications 17 à 28, caractérisé en ce qu'il comporte en outre des moyens de production d'alarme qui produisent une alarme lorsque les résultats délivrés par les moyens de calcul de concentration dépassent une valeur standard.

**30.** Système selon l'une des revendications 17 à 29, caractérisé en ce qu'il est adapté pour mesurer la concentration d'ions $SO_4^{2-}$, $SO_3^-$, $Cl^-$ et $Na^+$, qui sont des produits de décomposition des résines chimiques de purification du réacteur nucléaire, contenues dans le système de refroidissement primaire; et les moyens de production d'alarme produisent une alarme lorsque l'une quelconque des concentrations ioniques dépasse une valeur standard.

**31.** Système selon l'une des revendications 25 à 30, caractérisé en ce que l'unité de comparaison de concentration convertit les valeurs de concentration produites par les moyens de calcul de concentration en des valeurs de conductivité électrique et les compare à des valeurs standards, et les moyens de contrôle de l'eau de réacteur règlent la qualité de l'eau de réacteur en maintenant lesdites valeurs converties au-dessous de valeurs standards.

**32.** Système selon l'une des revendications 17 à 31, caractérisé en ce qu'il comporte un générateur de fonctions situé entre l'unité de sortie de signaux et l'unité d'entrée de signaux, et les signaux de formes d'ondes produits par l'unité d'entrée de signaux sont introduits dans l'unité de sortie de signaux au moyen du générateur de fonctions.

**33.** Système selon l'une des revendications 25 à 32, caractérisé en ce qu'il comporte en outre des moyens de prédiction pour prédire des accidents potentiels dans le système de refroidissement primaire sur la base de l'information produite par l'unité de comparaison de concentration, et des moyens de production d'alarme déclenchent une alarme basée sur cette prédiction.

**34.** Système selon l'une des revendications 25 à 33, caractérisé en ce que le système comprend un système de contrôle qui contrôle le fonctionnement correct desdits moyens d'application de tension, des moyens de calcul de concentration et de l'unité de comparaison de concentration.

**35.** Système selon la revendication 34, caractérisé en ce que les moyens de production d'alarme produisent une alarme dans le cas où un défaut de fonctionnement est détecté par le système de contrôle.

**36.** Système selon l'une quelconque des revendications 17 à 35, caractérisé en ce que le réacteur nucléaire est un réacteur nucléaire à eau bouillante ou un réacteur nucléaire à eau sous pression.

FIG. 1

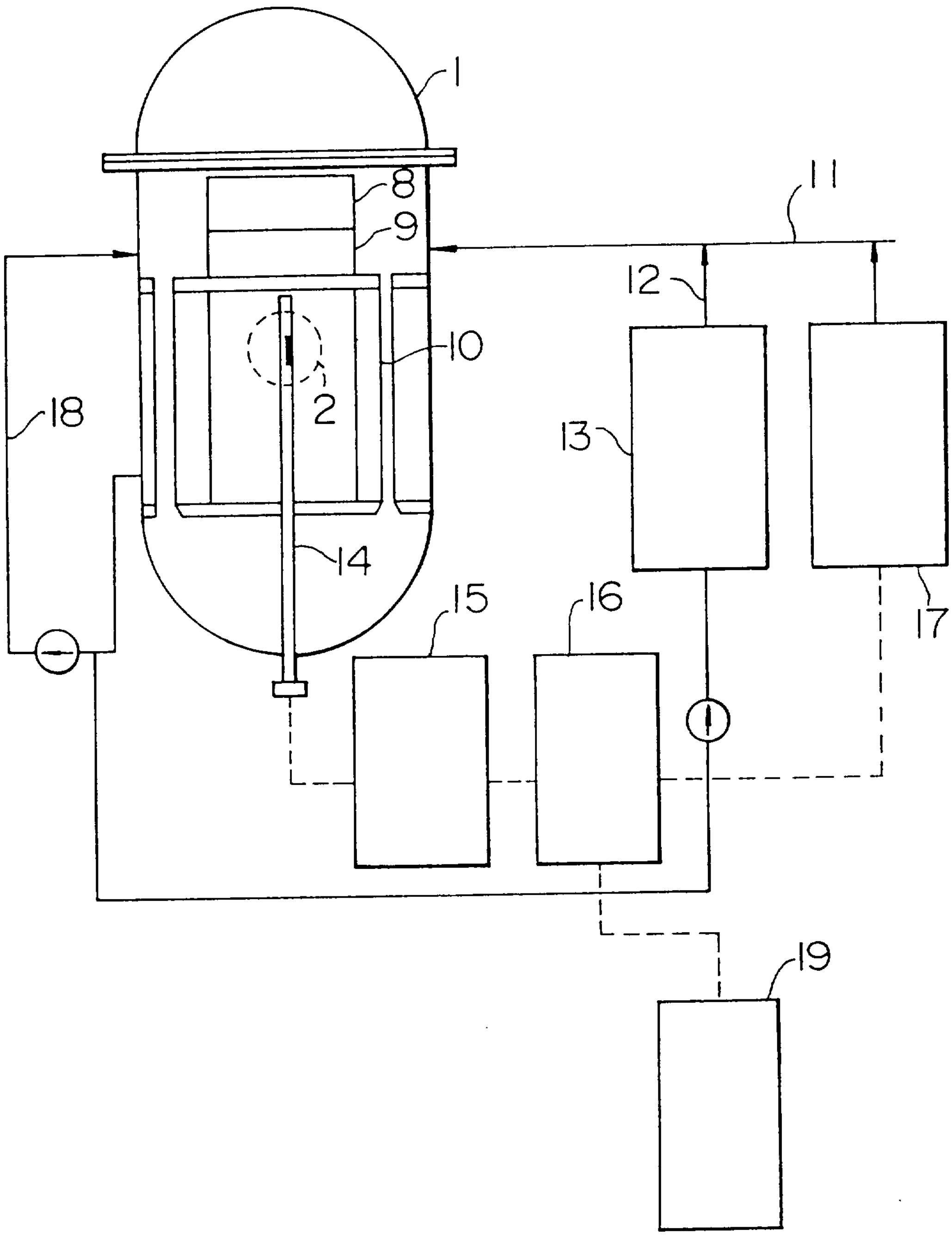

FIG. 2

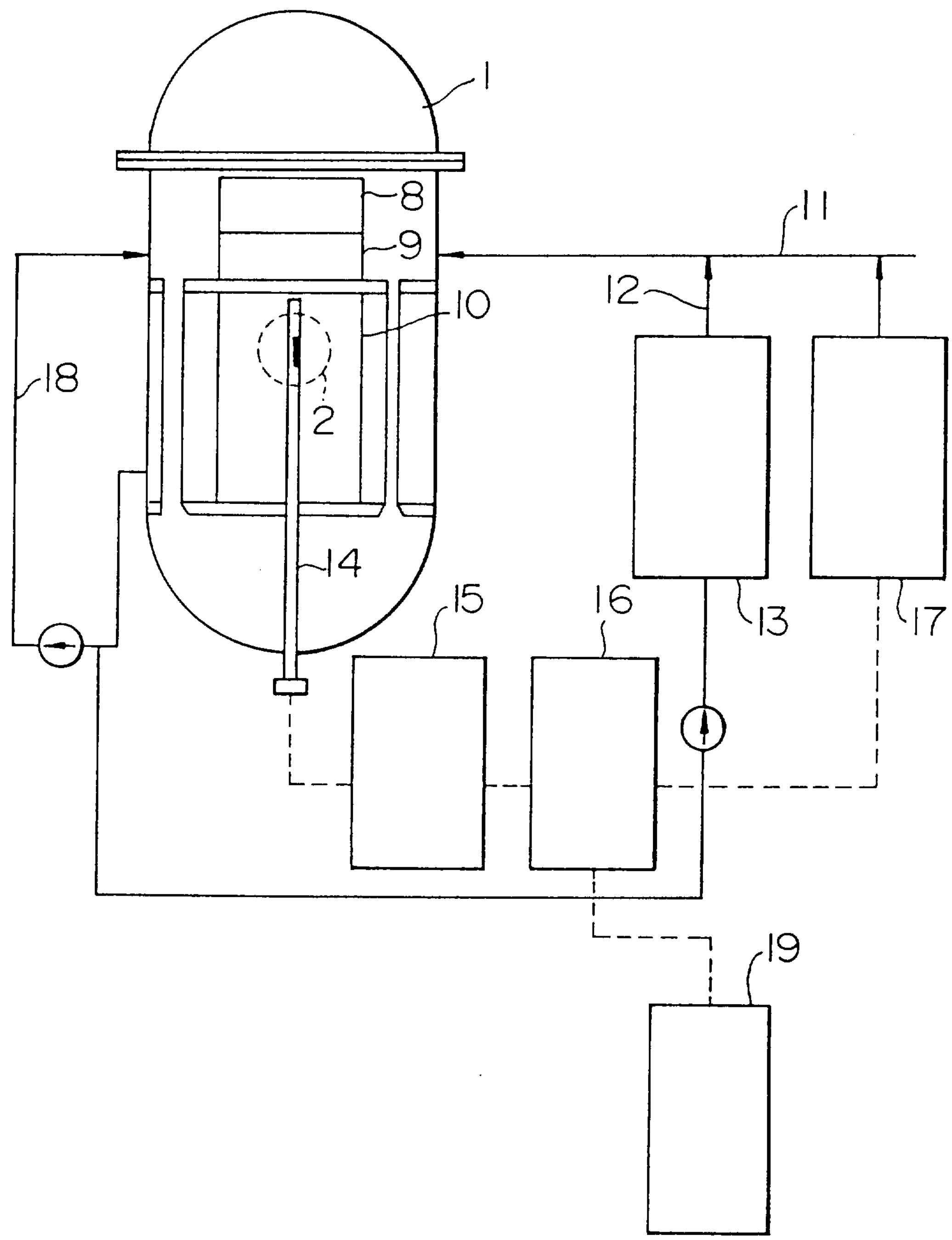

FIG. 3

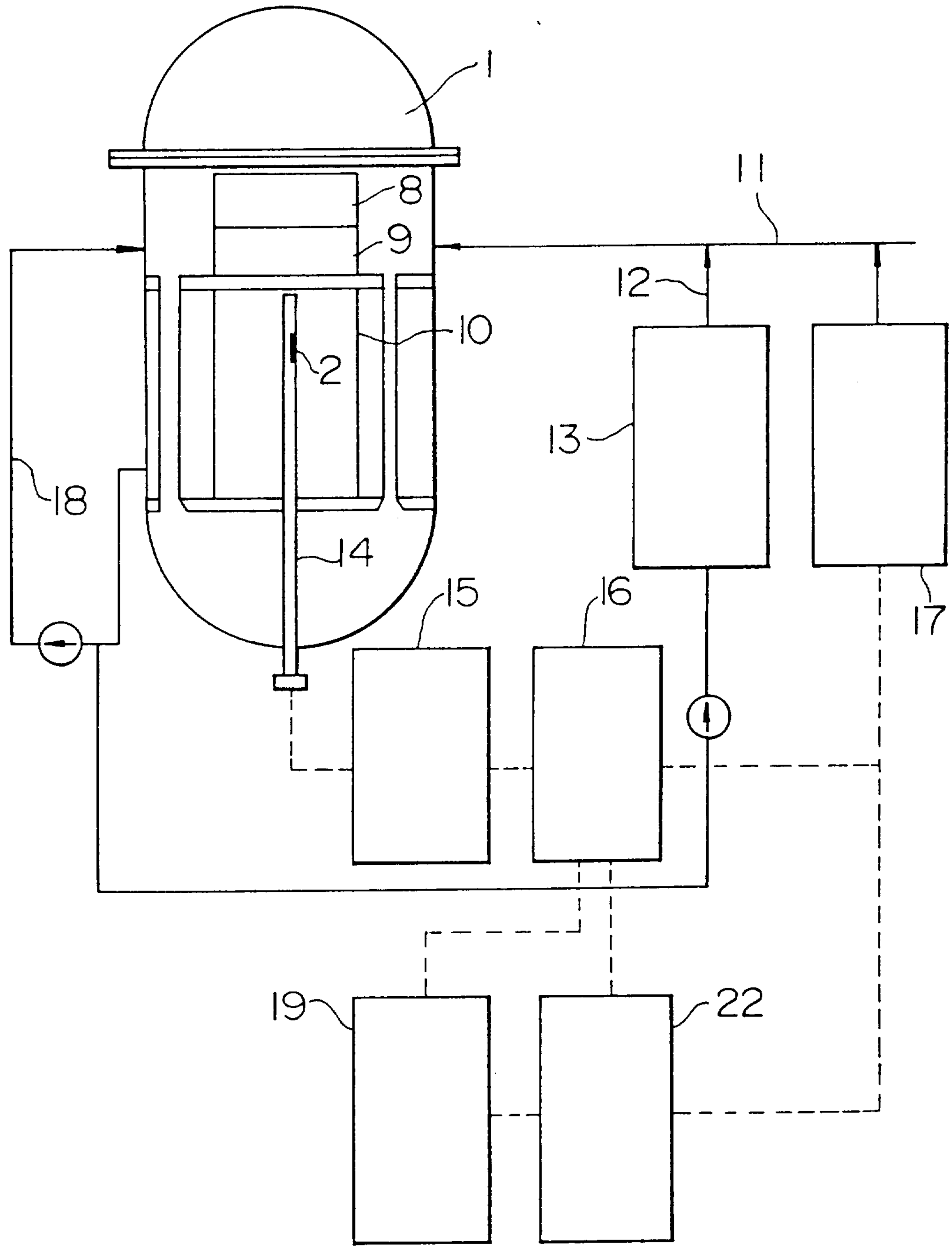

FIG. 4

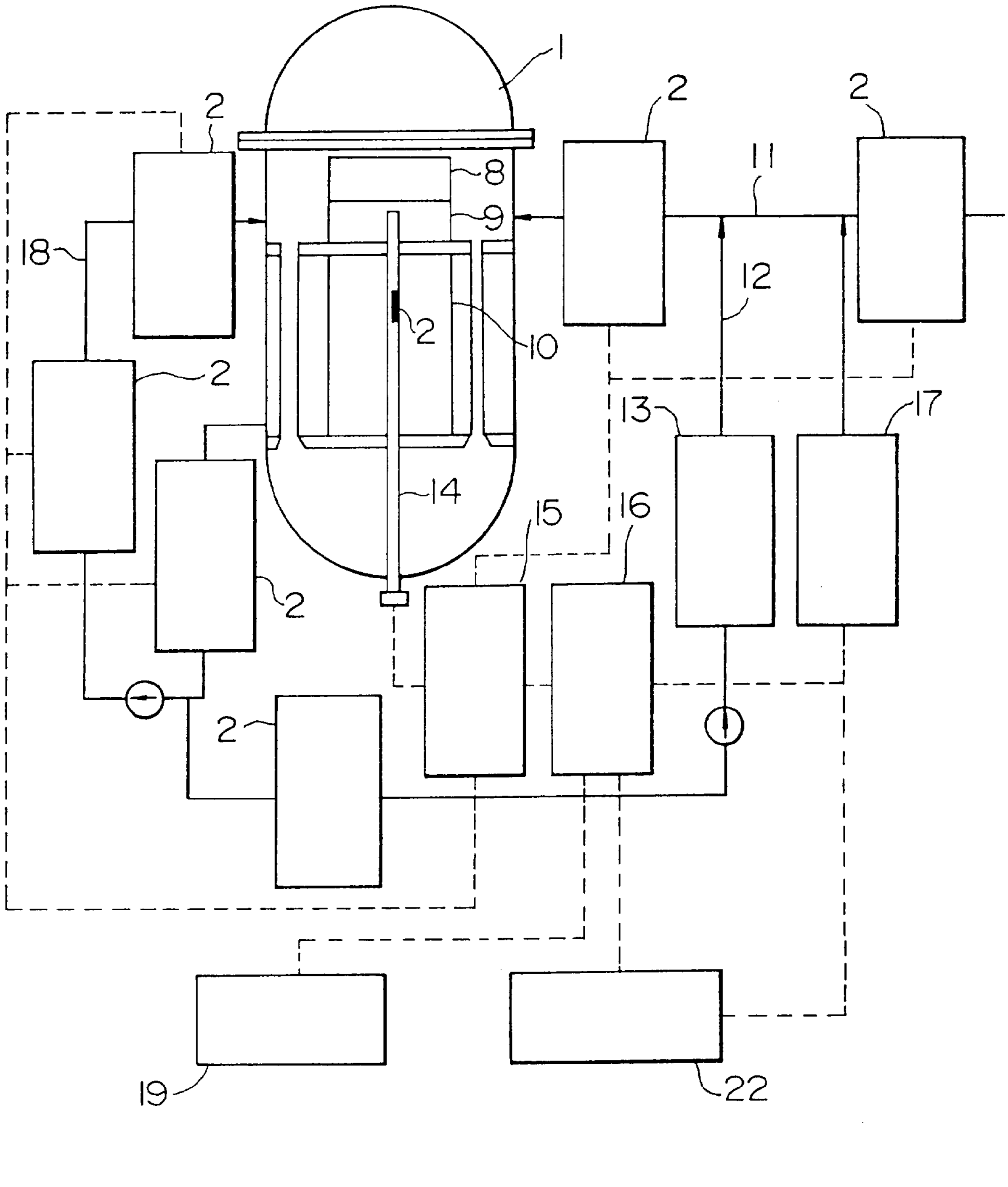

FIG. 5

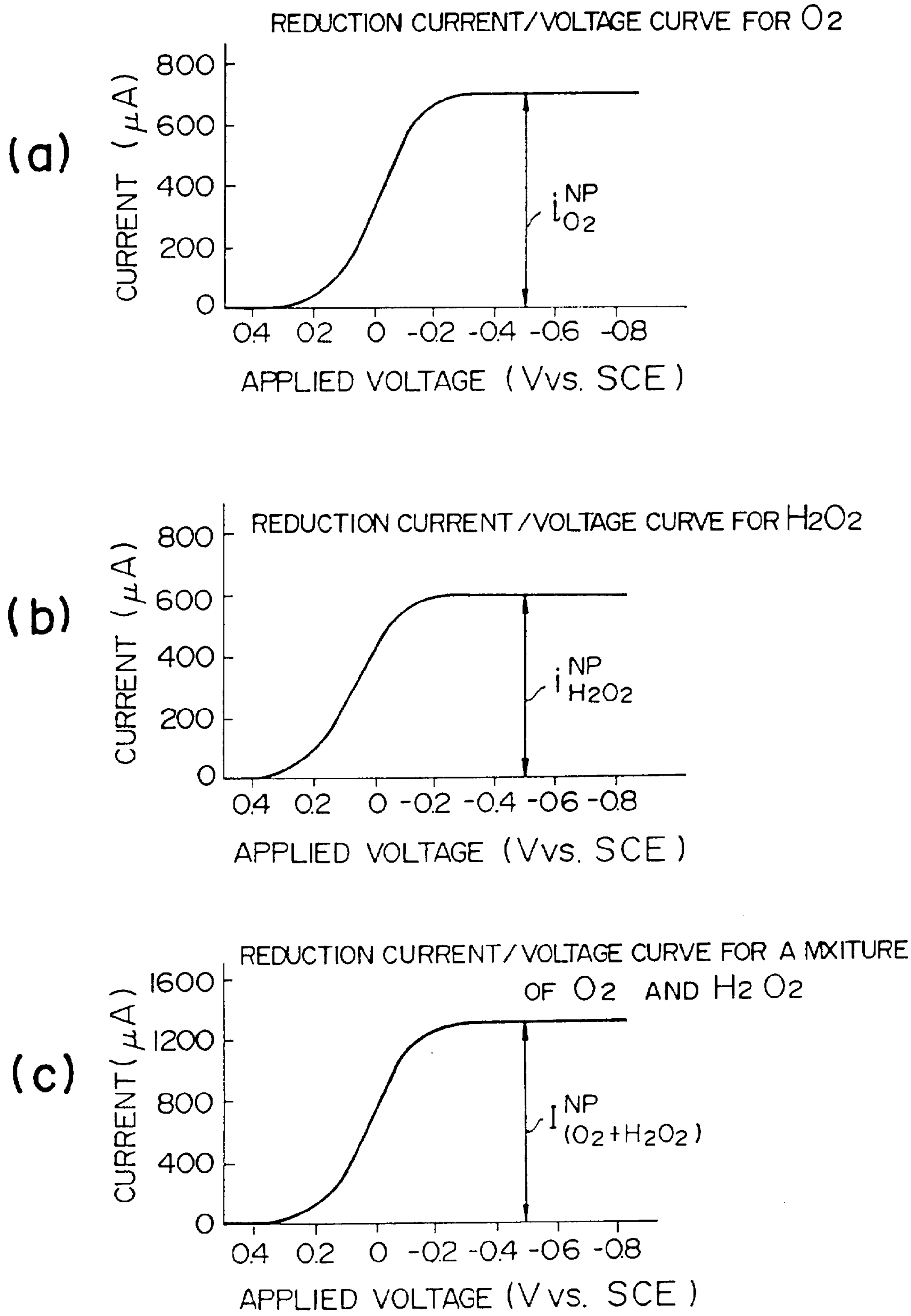
REDUCTION CURRENT/VOLTAGE CURVE FOR O2
(a)
CURRENT (μA)
800
600
400
200
0
0.4 0.2 0 -0.2 -0.4 -0.6 -0.8
APPLIED VOLTAGE (V vs. SCE)
i NP O2
REDUCTION CURRENT/VOLTAGE CURVE FOR H2O2
(b)
CURRENT (μA)
800
600
400
200
0
0.4 0.2 0 -0.2 -0.4 -0.6 -0.8
APPLIED VOLTAGE (V vs. SCE)
i NP H2O2
REDUCTION CURRENT/VOLTAGE CURVE FOR A MXITURE OF O2 AND H2 O2
(c)
CURRENT (μA)
1600
1200
800
400
0
0.4 0.2 0 -0.2 -0.4 -0.6 -0.8
APPLIED VOLTAGE (V vs. SCE)
I NP (O2+H2O2)

FIG. 6

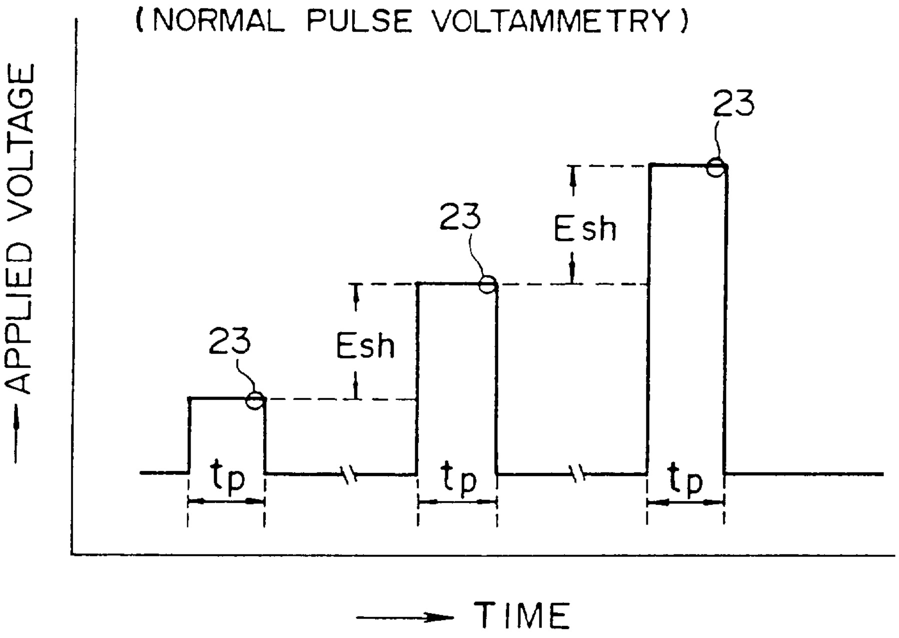


23 ---CURRENT SAMPLING POINT

FIG. 7

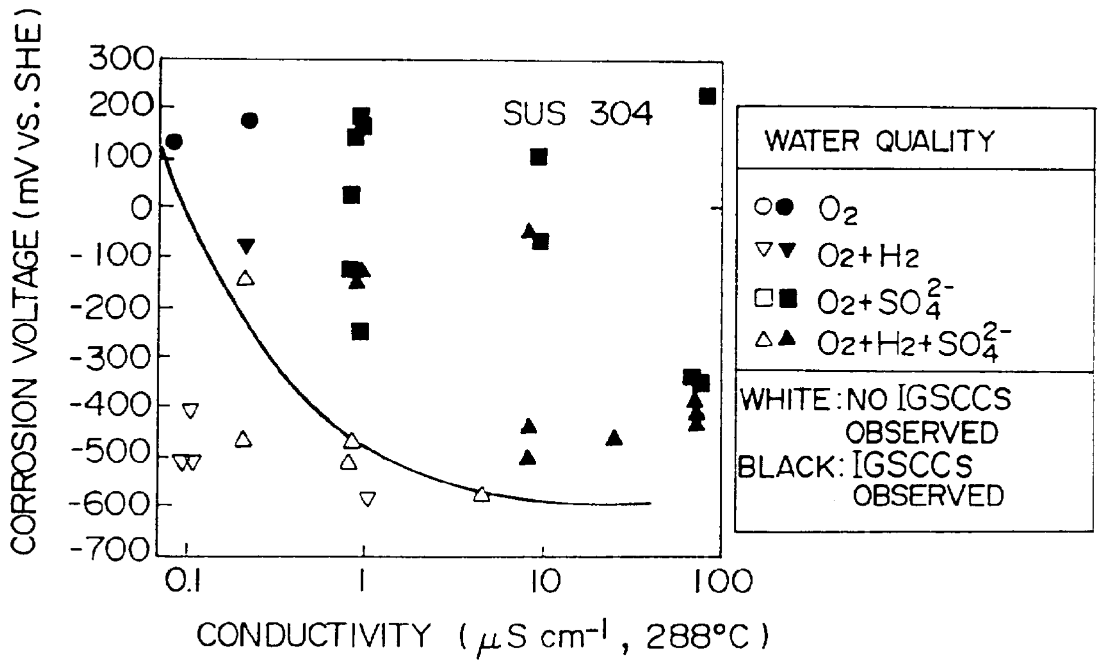
SUS 304
CORROSION VOLTAGE (mV vs. SHE)
300
200
100
0
-100
-200
-300
-400
-500
-600
-700
0.1
1
10
100
CONDUCTIVITY (μS cm-1, 288°C)
WATER QUALITY
O2
O2+H2
O2+SO4 2-
O2+H2+SO4 2-
WHITE: NO IGSCCS OBSERVED
BLACK: IGSCCS OBSERVED

FIG. 8

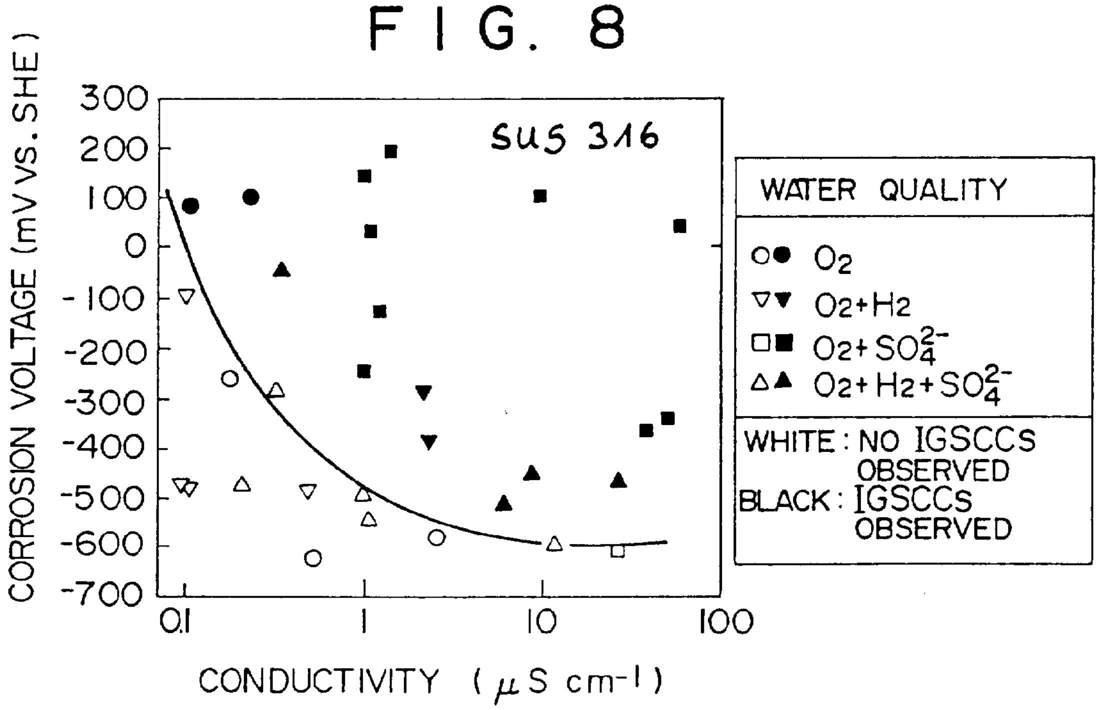
SUS 316
CORROSION VOLTAGE (mV vs. SHE)
300
200
100
0
-100
-200
-300
-400
-500
-600
-700
0.1
1
10
100
CONDUCTIVITY (μS cm-1)
WATER QUALITY
O2
O2+H2
O2+SO4 2-
O2+H2+SO4 2-
WHITE: NO IGSCCS OBSERVED
BLACK: IGSCCS OBSERVED

FIG. 9

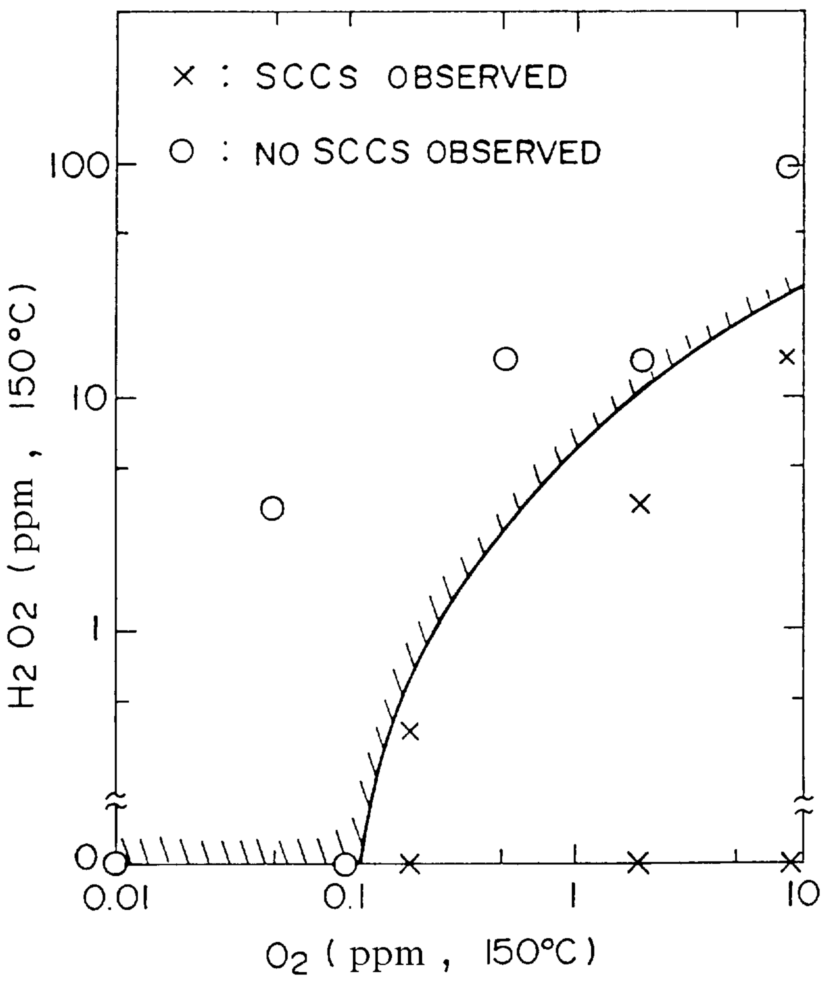
× : SCCS OBSERVED
○ : NO SCCS OBSERVED
100
10
1
0
0.01
0.1
1
10
H2 O2 ( ppm , 150°C )
O2 ( ppm , 150°C )

FIG. 10

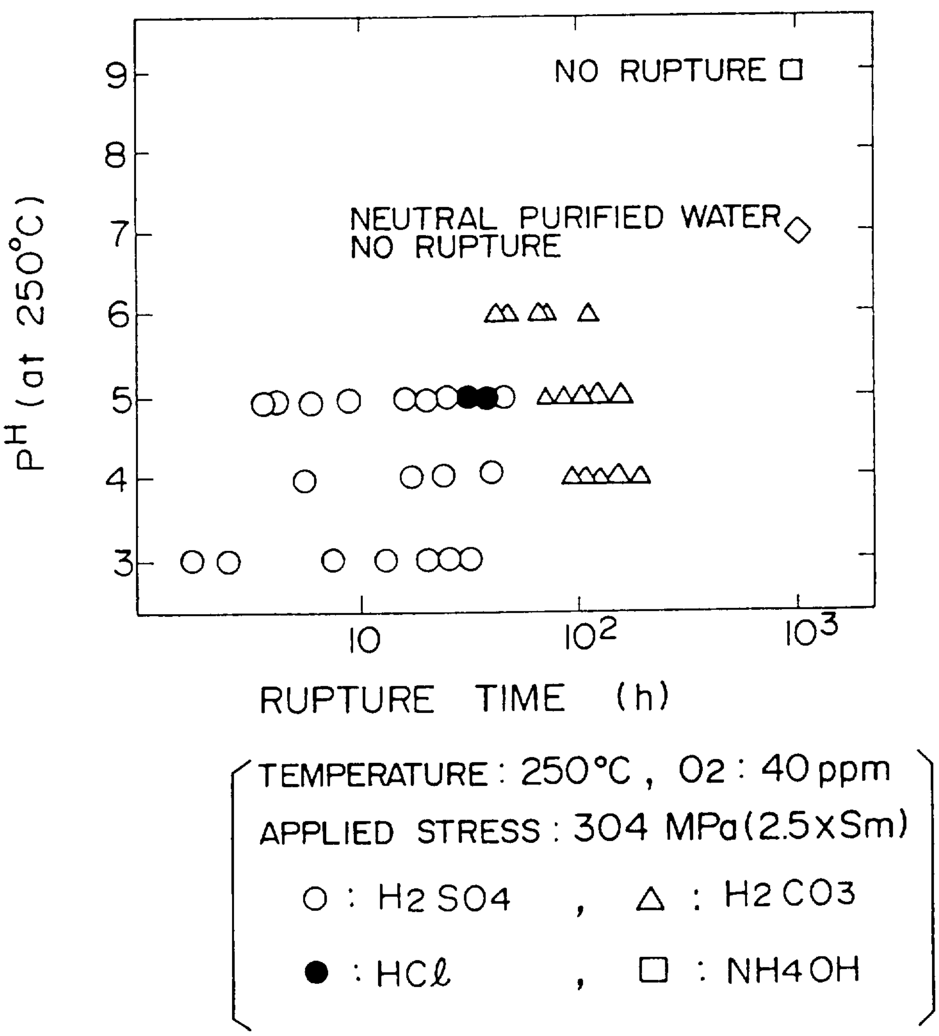
NO RUPTURE □
NEUTRAL PURIFIED WATER ◇
NO RUPTURE
9
8
7
6
5
4
3
pH (at 250°C)
10
10^2
10^3
RUPTURE TIME (h)
TEMPERATURE : 250°C , O2 : 40 ppm
APPLIED STRESS : 304 MPa (2.5xSm)
○ : H2 SO4 , △ : H2 CO3
● : HCℓ , □ : NH4 OH

FIG. 11

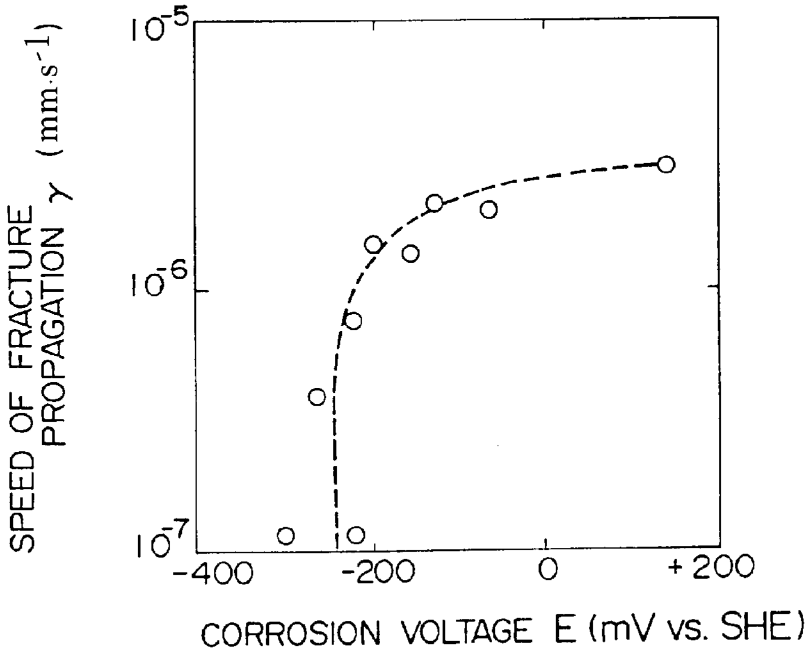
SPEED OF FRACTURE PROPAGATION γ (mm·s-1)
10-5
10-6
10-7
-400
-200
0
+200
CORROSION VOLTAGE E (mV vs. SHE)

FIG. 12

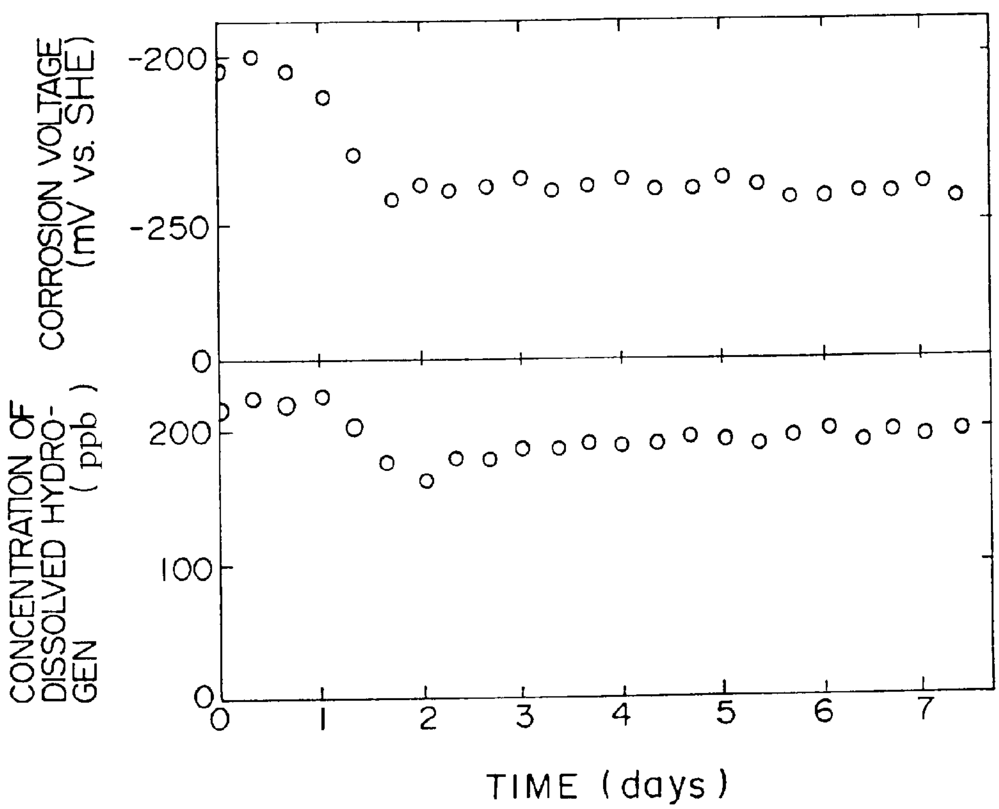
CORROSION VOLTAGE (mV vs. SHE)
-200
-250
0
CONCENTRATION OF DISSOLVED HYDROGEN (ppb)
200
100
0
0
1
2
3
4
5
6
7
TIME (days)

FIG. 13

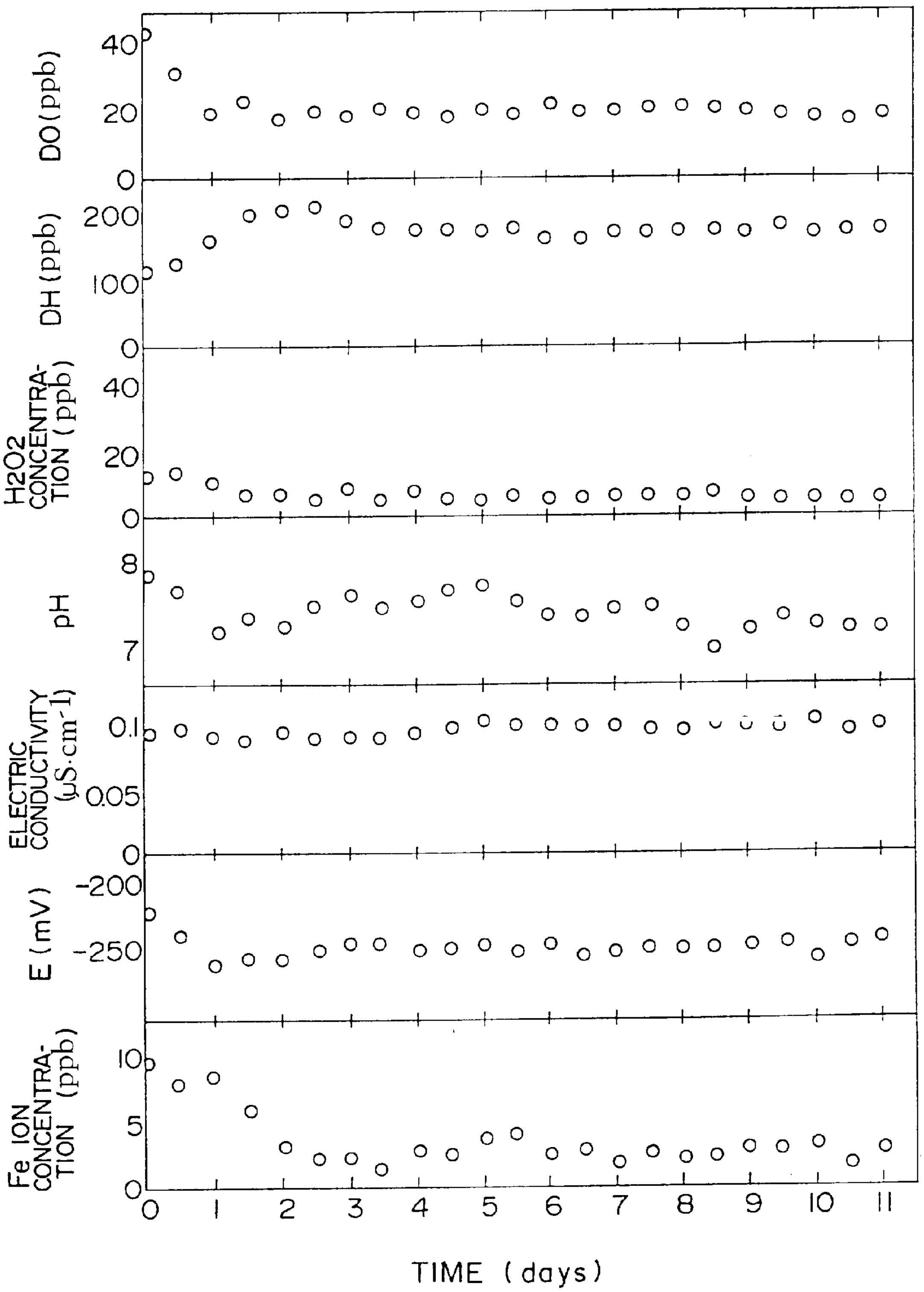
DO (ppb)
40
20
0
DH (ppb)
200
100
0
H2O2 CONCENTRATION (ppb)
40
20
0
pH
8
7
ELECTRIC CONDUCTIVITY (μS·cm-1)
0.1
0.05
0
E (mV)
-200
-250
Fe ION CONCENTRATION (ppb)
10
5
0
0 1 2 3 4 5 6 7 8 9 10 11
TIME (days)

FIG. 14

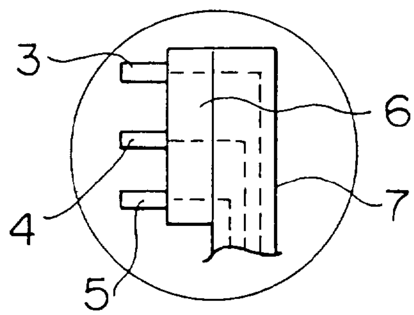


FIG. 15

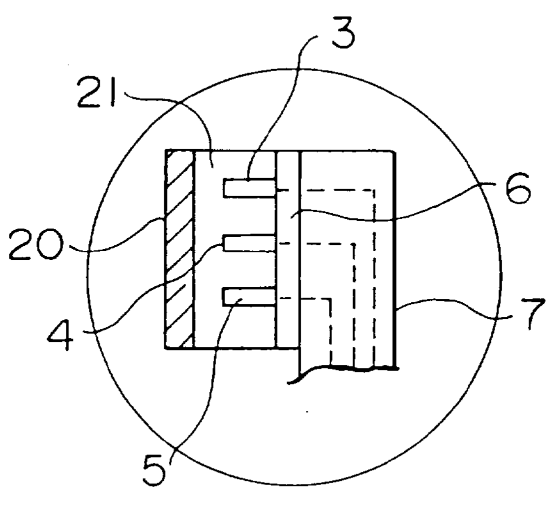

FIG. 16

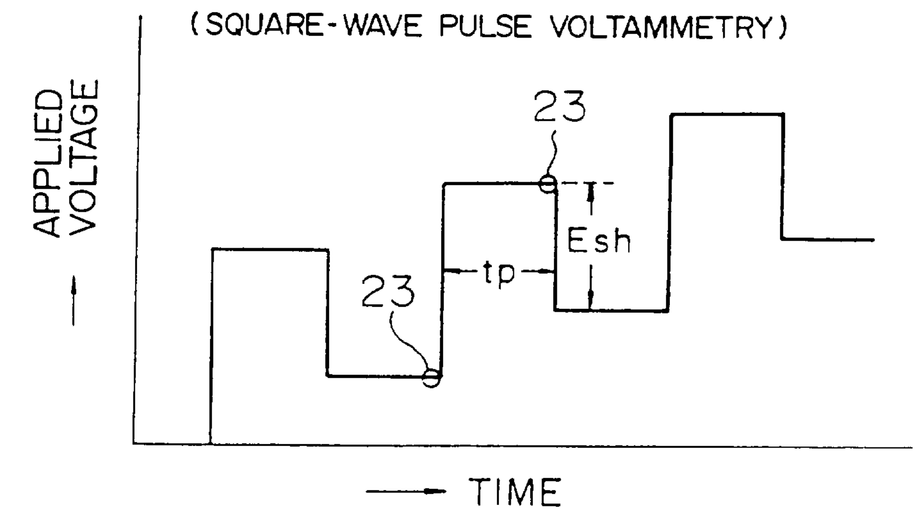
(SQUARE-WAVE PULSE VOLTAMMETRY)
APPLIED VOLTAGE
23
23
Esh
tp
TIME

FIG. 17

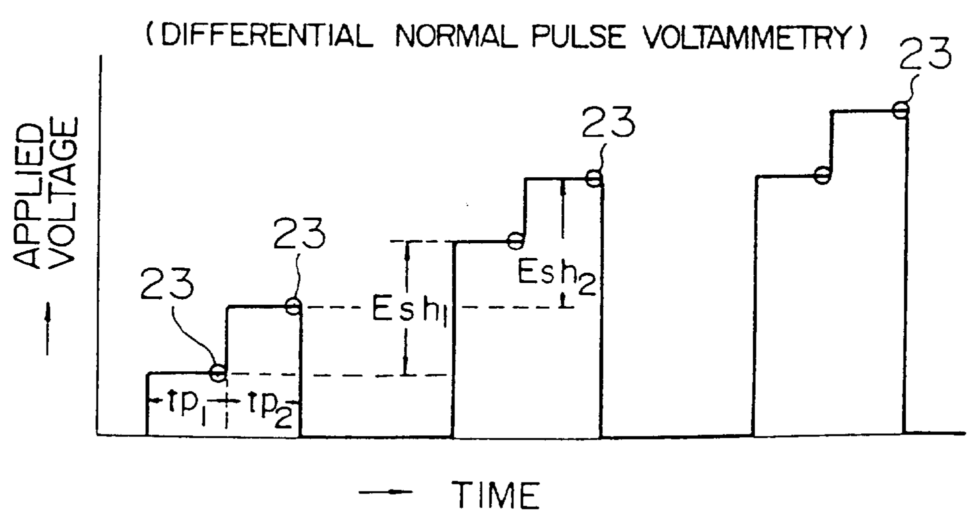
(DIFFERENTIAL NORMAL PULSE VOLTAMMETRY)
APPLIED VOLTAGE
23
23
23
23
Esh1
Esh2
tp1
tp2
TIME

FIG. 18

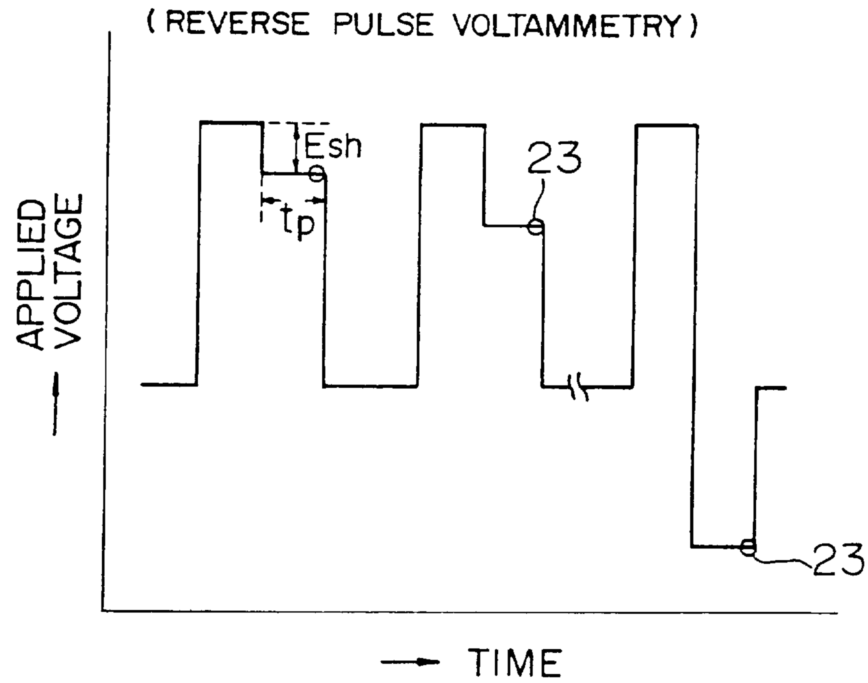
( REVERSE PULSE VOLTAMMETRY )
Esh
tp
23
23
→ APPLIED VOLTAGE
→ TIME

FIG. 19

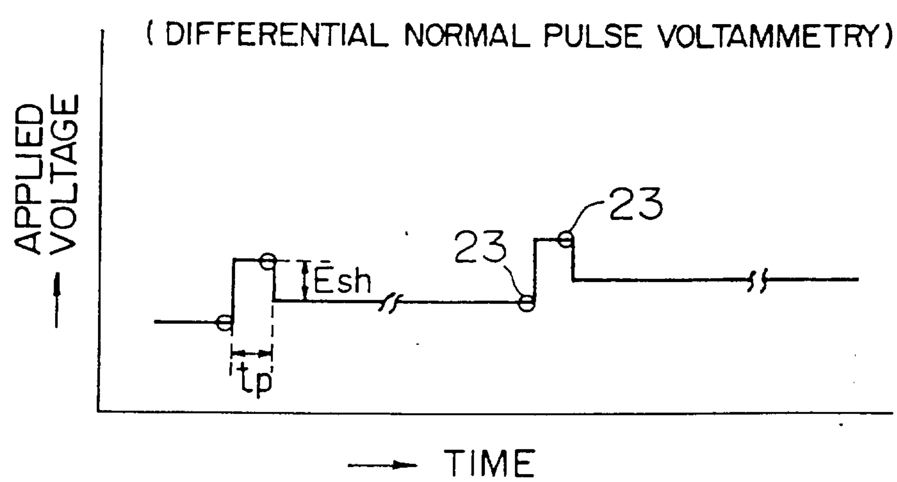
( DIFFERENTIAL NORMAL PULSE VOLTAMMETRY )
Esh
tp
23
23
→ APPLIED VOLTAGE
→ TIME